Europäisches Patentamt

European Patent Office

Office européen des brevets

(19)

(11) **EP 1 213 852 A1**

(12) **EUROPEAN PATENT APPLICATION**
published in accordance with Art. 158(3) EPC

(43) Date of publication:
**12.06.2002 Bulletin 2002/24**

(51) Int Cl.⁷: **H04B 7/005**

(21) Application number: **01936891.9**

(86) International application number:
**PCT/JP01/04805**

(22) Date of filing: **07.06.2001**

(87) International publication number:
**WO 02/09315 (31.01.2002 Gazette 2002/05)**

(84) Designated Contracting States:
**AT BE CH CY DE DK ES FI FR GB GR IE IT LI LU MC NL PT SE TR**

(30) Priority: **24.07.2000 JP 2000223007**

(71) Applicant: **MITSUBISHI DENKI KABUSHIKI KAISHA Tokyo 100-8310 (JP)**

(72) Inventor: **NAGAYASU, Takayuki, c/o Mitsubishi Denki KK Chiyoda-ku, Tokyo 100-8310 (JP)**

(74) Representative: **Pfenning, Meinig & Partner GbR Mozartstrasse 17 80336 München (DE)**

(54) **RECEIVING APPARATUS AND RECEIVING METHOD FOR RADIO COMMUNICATION**

(57)    In a radio communication receiving apparatus according to the present invention, a soft decision section 14 outputs a soft decision value as a result of demodulation of a received signal, and an error correction section 15 conducts error correction on the soft decision value. Furthermore, in the soft decision section 14, an equalizer 21 outputs a soft decision value and a hard decision value based on the received signal, and a decision value combining section 22 combines the hard decision value with the hard decision value according to a predetermined method, and outputs a decision value after the combining as a soft decision value.

## FIG.2

DECISION VALUE COMBINING SECTION

**Description**

TECHNICAL FIELD

The present invention relates to a radio communication receiving apparatus that can be adopted in the radio communication field such as automobile telephone, portable telephone, and cordless telephone. In particular, the present invention relates to a radio communication receiving apparatus, and its receiving method, that provides high quality communication by combining a soft decision value and a hard decision value, which are decision results of a received signal.

BACKGROUND ART

Hereafter, a conventional radio communication receiver apparatus will be described. For example, in a communication environment such as portable telephone, the received signal is sometimes distorted by frequency selective fading causing inter-symbol interference. As for such distortion, it is known to those skilled in the art to conduct demodulation by utilizing the inter-symbol interference component in an equalizer. Furthermore, in the case where error correction is conducted on such a communication environment, transmission of a high quality can be implemented in soft decision decoding using input soft decision values as compared with hard decision decoding using input hard decision values.

By the way, the hard decision value is a decision result of a transmitted signal, and the soft decision value is a combination of the hard decision value and reliability. To be concrete, for example, in the case where a bi-valued signal of "1" or "-1" is transmitted, the hard decision value is "1" or "-1." The soft decision value becomes, for example, "0.9" or "-0.4." In this example, however, the sign of the soft decision value represents the hard decision value. (If the sign of the soft decision value is +, the hard decision value becomes "1." If the sign of the soft decision value is -, the hard decision value becomes "-1." The absolute value of the soft decision value represents the reliability (a grater absolute value represents higher reliability).

Furthermore, it is known to those skilled in the art that in the case where inter-symbol interference is occurring on a radio transmission path an optimum hard decision value is obtained by using a maximum likelihood system estimation in the conventional radio communication receiving apparatus.

Furthermore, as a method for obtaining a soft decision value as a demodulation result, there is a method described in U.S. Patent No. 5119400 (which is hereafter referred to as a conventional art) . For example, in the case where error correction is conducted after demodulation, transmission of a high quality can be implemented in soft decision decoding using input soft decision values obtained by the conventional art as compared with hard decision decoding using input hard decision values obtained by the maximum likelihood system estimation.

In the case where there is no error correction in the conventional radio communication receiving apparatus described in the above-described reference, however, transmission of a high quality can be implemented in hard decision decoding using hard decision values obtained by the maximum likelihood system estimation as compared with soft decision decoding using input soft decision values obtained by the conventional art. Especially in the case where high-degree communication is conducted as in portable telephone, there is also a system in which the encoding rate of error correction is varied according to the communication condition. In some conditions, the encoding factor of error correction becomes approximately unity. Furthermore, there is also a system in which the same communication data is transmitted with an encoding factor made uneven. In this case, the system is sometimes designed so that a portion that is not subject to error correction will always exist in data. Thus, the conventional radio communication receiving apparatus has a problem that it cannot be the that the best data transmission quality is always obtained in the case where various systems as described above are used.

In view of the foregoing description, an object of the present invention is to provide a radio communication receiving apparatus, and a radio communication receiving method, capable of providing always the best data transmission quality even in the case where the encoding factor of error correction is approximately unity or the case where data that are not subjected to error correction exist.

DISCLOSURE OF THE INVENTION

A radio communication receiving apparatus according to the present invention includes an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value. The soft decision unit includes: an equalization unit which outputs a soft decision value and a hard decision value based on the received signal; and a decision value combining unit which combines the soft decision value with the hard decision value according to a predetermined method, and outputs a decision value after the combining as a soft decision value.

According to this invention, a hard decision value obtained by using a demodulation scheme suitable for hard decision and a soft decision value obtained by using a demodulation scheme suitable for soft decision can be suitable selected. Even in the case where the encoding factor of the error correction is close to unity or there are data that are not subjected to the error correction, therefore, the best transmission quality can be provided at all times.

A radio communication receiving apparatus according to the next invention further includes: a noise power estimation unit which estimates noise power contained in the received signal; and a soft decision value compensation unit which corrects the soft decision value after combining according to a noise power estimation value.

According to this invention, the noise power estimation unit is included. For example, even in the case where the noise poser contained in the received signal varies, therefore, the variation of the noise poser can be corrected.

A radio communication receiving apparatus according to the next invention includes an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value . And the soft decision unit includes : a level adjustment unit which conducts a level adjustment on the received signal; an equalization unit which outputs a soft decision value and a hard decision value based on the received signal after the level adjustment; a decision value combining unit which combines the soft decision value with the hard decision value according to a predetermined method, and outputs a decision value after the combining as a soft decision value; and a soft decision value compensation unit which corrects the soft decision value after the combining according to a level adjustment quantity.

According to this invention, the level adjustment unit is included. In the case where a level variation occurs in the received signal, therefore, the input level of the received signal can be adjusted so as to become a suitable level. A deviation of the soft decision value can be corrected by the adjustment.

A radio communication receiving apparatus according to the next invention includes an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value . And the soft decision unit includes: an equalization unit which outputs a soft decision value and a hard decision value based on the received signal; a noise power estimation unit which estimates noise power contained in the received signal; a soft decision value compensation unit which corrects the soft decision value according to a noise power estimation value; and a decision value combining unit which combines the soft decision value after the correction with the hard decision value according to a predetermined method, and outputs a decision value after the combining as a soft decision value.

According to this invention, the noise power estimation unit is included. For example, even in the case where the noise poser contained in the received signal varies, therefore, the variation of the noise poser can be corrected.

A radio communication receiving apparatus according to the next invention includes an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value. And the soft decision unit includes : a level adjustment unit which conducts a level adjustment on the received signal; an equalization unit which outputs a soft decision value and a hard decision value based on the received signal after the level adjustment; a soft decision value compensation unit which corrects the soft decision value according to a level adjustment quantity; and a decision value combining unit which combines the soft decision value after the correction with the hard decision value according to a predetermined method, and outputs a decision value after the combining as a soft decision value.

According to this invention, the level adjustment unit is included. In the case where a level variation occurs in the received signal, therefore, the input level of the received signal can be adjusted so as to become a suitable level. A deviation of the soft decision value can be corrected by the adjustment.

A radio communication receiving apparatus according to the next invention further includes: a first channel impulse response estimation unit which estimates a channel impulse response based on a received signal output by the A/D conversion unit; a time inversion control unit which exercises control as to whether time inversion should be conducted on the received signal based on a value of the channel impulse response estimation; a received signal inversion/non-inversion unit which conducts processing on the received signal under the control of the time inversion control unit, and outputs a result of the processing to the soft decision unit; and a soft decision value inversion/non-inversion unit which restores soft decision values output by the soft decision unit, in order preceding the time inversion under the control of the time inversion control unit. And the soft decision unit conducts soft decision processing on a signal output by the received signal inversion/non-inversion unit, and the error correction unit conducts error correction on the signal output by the received signal inversion/non-inversion unit.

According to this invention, even in the case where there exists a delayed wave having high power and a large delay time, soft decision processing can be conducted in a state of a reduced delay time by conducting time inversion on the received signal.

A radio communication receiving apparatus according to the next invention includes as the soft decision unit: a first soft decision unit that does not conduct successive update of a channel impulse response and a second soft decision unit that conducts successive update of the channel impulse response. The radio communication receiving apparatus further includes: a first channel impulse response estimation unit which estimates the channel impulse response based on a received signal output by the A/D conversion unit; and a soft decision selection unit which selects a soft decision unit to be used, from the first soft decision unit and the second soft decision unit based on a value of the channel impulse response estimation.

According to this invention, a suitable equalization scheme can be selected according to the state of the transmission path. Therefore, the communication quality can be further improved. Furthermore, by combining an equalizer that does not conduct successive update of the transmission characteristic and instead that is increased in the number of states with an equalizer that conducts successive update of the transmission characteristic and instead that is decreased in the number of states, the communication quality can be improved while suppressing the increase of the processing quantity.

A radio communication receiving apparatus according to the next invention includes as the soft decision unit: a first soft decision unit that does not conduct successive update of a channel impulse response and a second soft decision unit that conducts successive update of the channel impulse response both serving as the soft decision unit. The radio communication receiving apparatus further includes: a first channel impulse response estimation unit which estimates the channel impulse response based on a received signal output by the A/D conversion unit; a soft decision selection unit which selects a soft decision unit to be used, from the first soft decision unit and the second soft decision unit based on a value of the channel impulse response estimation; a time inversion control unit which exercises control as to whether time inversion should be conducted on the received signal based on the channel impulse response estimation value; a received signal inversion/non-inversion unit which conducts processing on the received signal under the control of the time inversion control unit, and outputs a result of the processing to the selected soft decision unit; and a soft decision value inversion/non-inversion unit which restores soft decision values output by the selected soft decision unit, in order preceding the time inversion under the control of the time inversion control unit. And the selected soft decision unit conducts soft decision processing on a signal output by the received signal inversion/non-inversion unit, and the error correction unit conducts error correction on the signal output by the received signal inversion/non-inversion unit.

According to this invention, even in the case where there exists a delayed wave having high power and a large delay time, soft decision processing can be conducted in a state of a reduced delay time by conducting time inversion on the received signal. Furthermore, by selecting the suitable equalization method in accordance with the state of the transmission path, the communication quality can be further enhanced. Furthermore, by combining an equalizer that does not conduct successive update of the transmission characteristic and instead that is increased in the number of states with an equalizer that conducts successive update of the transmission characteristic and instead that is decreased in the number of states, the communication quality can be improved while suppressing the increase of the processing quantity.

In a radio communication receiving apparatus according to this invention, the decision value combining unit includes: a soft decision value/hard decision value conversion unit which converts a soft decision value with a symbol taken as unit, received from the equalization unit to a hard decision value; a comparison unit which compares the hard decision value after the conversion with a hard decision value with a symbol taken as unit, received from the equalization unit; and a selection unit which selects either the hard decision value or the soft decision value output by the equalization unit based on a result of the comparison, and outputs a decision value after the selection as a soft decision value.

According to the present invention, the hard decision value completely coincides with the hard decision value derived from the soft decision value, in the case where there is adopted a configuration in which the soft decision value is compared with the hard decision value every symbol. With respect to data that are not subjected to error correction, therefore, the same characteristic as that in the case where hard decision decoding has been carried out can be obtained.

In a radio communication receiving apparatus according to the next invention, the decision value combining unit includes: a soft decision value/hard decision value conversion unit which converts a soft decision value with a symbol taken as unit, received from the equalization unit to a hard decision value; a bit conversion unit which converts a hard decision value with a symbol taken as unit, output by the equalization unit to a hard decision value with a bit taken as unit; a comparison unit which compares hard decision values after the conversion with each other; and a selection unit which selects either the hard decision value or the soft decision value output by the equalization unit based on a result of the comparison, and outputs a decision value after the selection as a soft decision value.

According to this invention, the decision value combining unit selects either the soft decision value or the hard decision value every bit. As compared with the case where selection is conducted every symbol or every block, therefore, estimation of higher precision can be carried out.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on path metrics with a branch taken as unit, and further generates path selection information that represents which paths have been selected; a hard decision sequence estimation unit which estimates a hard decision value based on the path selection information; and a soft decision value generation unit which generates a soft decision value based on the path metrics with a branch taken as unit.

According to this invention, the hard decision value is calculated based on the Viterbi algorithm (most likelihood estimation), and the soft decision value is calculated based on the path metric successively calculated by using the Viterbi algorithm. As compared with the case where the hard decision value and the soft decision value are calculated separately, therefore, the hard decision value and the soft decision value can be estimated with processing of a smaller scale.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on path metrics with a branch taken as unit, and further generates path selection information that represents which path has been selected; a hard decision sequence estimation unit which estimates a hard decision value based on the path selection information; and a soft decision value generation unit which generates a soft decision value based on the survivor metrics.

According to this invention, the soft decision value is calculated base on as many survivor metrics as 1/Q of the number of path metrics. As compared with the configuration in which the soft decision value is calculated based on the path metric successively calculated by using the Viterbi algorithm, therefore, the number of processing steps can be remarkably reduced.

In a radio communication receiving apparatus according to the next invention, the replica generation unit further generates replicas of the received signal by using the path selection information besides the value of estimation of the channel impulse response.

According to this invention, the replica generation unit utilizes the path selection information (decision value). Therefore, the processing quantity required for replica generation can be remarkably reduced. Furthermore, in the case where the path selection information is utilized, the precision of the soft decision value is degraded. By combining the soft decision value with the hard decision value by using the decision value combining unit, the degradation of the soft decision value can be mitigated. Therefore, an excellent transmission quality can be ensured with a processing quantity of a comparatively small scale.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the survivor selection information is successively updated by using a known adaptive algorithm. Even in the case where the communication condition varies fast, therefore, communication of a high quality can be implemented.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the hard decision value is updated successively by using a known adaptive algorithm. Even in the case where the communication condition varies fast, therefore, communication of a high quality can be implemented.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further successively updates the channel impulse response of the received signal by taking a state as unit, based on the path selection information, and the replica generation unit updates replicas of the received signal corresponding to respective branches by using the path selection information whenever the channel impulse response with a state taken as the unit is updated.

According to this invention, the estimation value of the channel impulse response is updated by taking a survivor as the unit. Even in the case where the communication condition varies very fast, therefore, communication of high precision can be implemented.

In a radio communication receiving apparatus according to the next invention, the soft decision value generation unit includes: a symbol unit maximum likelihood metric selection unit which selects a maximum likelihood metric by taking a symbol as unit, based on the path metrics or the survivor metrics with a branch taken as unit; a bit-by-bit maximum likelihood metric selection unit which selects a maximum likelihood metric by taking a bit as unit, based on the maximum likelihood metric with a symbol taken as the unit; and a metric difference calculation unit which calculates a difference between the maximum likelihood metrics with a bit taken as the unit.

According to this invention, soft decision decoding can be conducted by using a soft decision value calculated by taking a bit as the unit. As compared with the case where the reliability is calculated by taking a symbol or a block as the unit, therefore, the communication quality can be improved remarkably.

In a radio communication receiving apparatus according to the next invention, the decision value combining unit includes: a soft decision value/hard decision value conversion unit which converts a soft decision value with a symbol taken as unit, received from the equalization unit to a hard decision value; a comparison unit which compares the hard decision value after the conversion with a hard decision value with a symbol taken as unit, received from the equalization unit; and a selection unit which selects either the hard decision value or the soft decision value output by the equalization unit based on a result of the comparison, and outputs a decision value after the selection as a soft decision value.

According to the present invention, the hard decision value completely coincides in the present invention with the hard decision value derived from the soft decision value, in the case where there is adopted a configuration in which the soft decision value is compared with the hard decision value every symbol. With respect to data that are not subjected to error correction, therefore, the same characteristic as that in the case where hard decision decoding has been carried out can be obtained.

In a radio communication receiving apparatus according to the next invention, the decision value combining unit includes: a soft decision value/hard decision value conversion unit which converts a soft decision value with a symbol taken as unit, received from the equalization unit to a hard decision value; a bit conversion unit which converts a hard decision value with a symbol taken as unit, output by the equalization unit to a hard decision value with a bit taken as unit; a comparison unit which compares hard decision values after the conversion with each other; and a selection unit which selects either the hard decision value or the soft decision value output by the equalization unit based on a result of the comparison, and outputs a decision value after the selection as a soft decision value.

According to this invention, the decision value combining unit selects either the soft decision value or the hard decision value every bit. As compared with the case where selection is conducted every symbol or every block, therefore, estimation of higher precision can be carried out.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the path metrics with a branch taken as unit.

According to this invention, the hard decision value is calculatedbased on the Viterbi algorithm (most likelihood estimation), and the soft decision value is calculated based on the path metric successively calculated by using the Viterbi algorithm. As compared with the case where the hard decision value and the soft decision value are calculated separately, therefore, the hard decision value and the soft decision value can be estimated with processing of a smaller scale.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the survivor metrics.

According to this invention, the soft decision value is calculated base on as many survivor metrics as $1/Q$ of the number of path metrics. As compared with the configuration in which the soft decision value is calculated based on the path metric successively calculated by using the Viterbi algorithm, therefore, the number of processing steps can be remarkably reduced.

In a radio communication receiving apparatus according to the next invention, the replica generation unit further generates replicas of the received signal by using the path selection information besides the value of estimation of the channel impulse response.

According to this invention, the replica generation unit utilizes the path selection information (decision value). Therefore, the processing quantity required for replica generation can be remarkably reduced. Furthermore, in the case where the path selection information is utilized, the precision of the soft decision value is degraded. By combining the soft decision value with the hard decision value by using the decision value combining unit, the degradation of the soft decision value can be mitigated. Therefore, an excellent transmission quality can be ensured with a processing quantity of a comparatively small scale.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the survivor selection information is successively updated by using a known adaptive algorithm. Even in the case where the communication condition varies fast, therefore, communication of a high quality can be implemented.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the hard decision value is updated successively by using a known adaptive algorithm. Even in the case where the communication condition varies fast, therefore, communication of a high quality can be implemented.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further successively updates the channel impulse response of the received signal by taking a state as unit, based on the path selection information, and the replica generation unit updates replicas of the received signal corresponding to respective branches by using the path selection information whenever the channel impulse response with a state taken as the unit is updated.

According to this invention, the estimation value of the channel impulse response is updated by taking a survivor as the unit. Even in the case where the communication condition varies very fast, therefore, communication of high precision can be implemented.

In a radio communication receiving apparatus according to the next invention, the soft decision value generation unit includes: a symbol unit maximum likelihood metric selection unit which selects a maximum likelihood metric by taking a symbol as unit, based on the path metrics or the survivor metrics with a branch taken as unit; a bit-by-bit maximum likelihood metric selection unit which selects a maximum likelihood metric by taking a bit as unit, based on the maximum likelihood metric with a symbol taken as the unit; and a metric difference calculation unit which calculates a difference between the maximum likelihood metrics with a bit taken as the unit.

According to this invention, soft decision decoding can be conducted by using a soft decision value calculated by taking a bit as the unit. As compared with the case where the reliability is calculated by taking a symbol or a block as the unit, therefore, the communication quality can be improved remarkably.

In a radio communication receiving apparatus according to the next invention, the decision value combining unit includes: a soft decision value/hard decision value conversion unit which converts a soft decision value with a symbol taken as unit, received from the equalization unit to a hard decision value; a comparison unit which compares the hard decision value after the conversion with a hard decision value with a symbol taken as unit, received from the equalization unit; and a selection unit which selects either the hard decision value or the soft decision value output by the equalization unit based on a result of the comparison, and outputs a decision value after the selection as a soft decision value.

According to the present invention, the hard decision value completely coincides with the hard decision value derived from the soft decision value, in the case where there is adopted a configuration in which the soft decision value is compared with the hard decision value every symbol. With respect to data that are not subjected to error correction, therefore, the same characteristic as that in the case where hard decision decoding has been carried out can be obtained.

In a radio communication receiving apparatus according to the next invention, the decision value combining unit includes: a soft decision value/hard decision value conversion unit which converts a soft decision value with a symbol taken as unit, received from the equalization unit to a hard decision value; a bit conversion unit which converts a hard decision value with a symbol taken as unit, output by the equalization unit to a hard decision value with a bit taken as unit; a comparison unit which compares hard decision values after the conversion with each other; and a selection unit which selects either the hard decision value or the soft decision value output by the equalization unit based on a result of the comparison, and outputs a decision value after the selection as a soft decision value.

According to this invention, the decision value combining unit selects either the soft decision value or the hard decision value every bit. As compared with the case where selection is conducted every symbol or every block, therefore, estimation of higher precision can be carried out.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the path metrics with a branch taken as unit.

According to this invention, the hard decision value is calculated based on the Viterbi algorithm (most likelihood estimation), and the soft decision value is calculated based on the path metric successively calculated by using the Viterbi algorithm. As compared with the case where the hard decision value and the soft decision value are calculated separately, therefore, the hard decision value and the soft decision value can be estimated with processing of a smaller scale.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the survivor metrics.

According to this invention, the soft decision value is calculated base on as many survivor metrics as $1/Q$ of the number of path metrics. As compared with the configuration in which the soft decision value is calculated based on the path metric successively calculated by using the Viterbi algorithm, therefore, the number of processing steps can be remarkably reduced.

In a radio communication receiving apparatus according to the next invention, the replica generation unit further generates replicas of the received signal by using the path selection information besides the value of estimation of the channel impulse response.

According to this invention, the replica generation unit utilizes the path selection information (decision value). Therefore, the processing quantity required for replica generation can be remarkably reduced. Furthermore, in the case where the path selection information is utilized, the precision of the soft decision value is degraded. By combining the soft decision value with the hard decision value by using the decision value combining unit, the degradation of the soft decision value can be mitigated. Therefore, an excellent transmission quality can be ensured with a processing quantity of a comparatively small scale.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the survivor selection information is successively updated by using a known adaptive algorithm. Even in the case where the communication condition varies fast, therefore, communication of a high quality can be implemented.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the hard decision value is updated successively by using a known adaptive algorithm. Even in the case where the communication condition varies fast, therefore, communication of a high quality can be implemented.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further successively updates the channel impulse response of the received signal by taking a state as unit, based on the path selection information, and the replica generation unit updates replicas of the received signal corresponding to respective branches by using the path selection information whenever the channel impulse response with a state taken as the unit is updated.

According to this invention, the estimation value of the channel impulse response is updated by taking a survivor as the unit. Even in the case where the communication condition varies very fast, therefore, communication of high precision can be implemented.

In a radio communication receiving apparatus according to the next invention, the soft decision value generation unit includes: a symbol unit maximum likelihood metric selection unit which selects a maximum likelihood metric by taking a symbol as unit, based on the path metrics or the survivor metrics with a branch taken as unit; a bit-by-bit maximum likelihood metric selection unit which selects a maximum likelihood metric by taking a bit as unit, based on the maximum likelihood metric with a symbol taken as the unit; and a metric difference calculation unit which calculates a difference between the maximum likelihood metrics with a bit taken as the unit.

According to this invention, soft decision decoding can be conducted by using a soft decision value calculated by taking a bit as the unit. As compared with the case where the reliability is calculated by taking a symbol or a block as the unit, therefore, the communication quality can be improved remarkably.

In a radio communication receiving apparatus according to the next invention, the decision value combining unit includes: a soft decision value/hard decision value conversion unit which converts a soft decision value with a symbol taken as unit, received from the equalization unit to a hard decision value; a comparison unit which compares the hard decision value after the conversion with a hard decision value with a symbol taken as unit, received from the equalization unit; and a selection unit which selects either the hard decision value or the soft decision value output by the equalization unit based on a result of the comparison, and outputs a decision value after the selection as a soft decision value.

According to the present invention, the hard decision value completely coincides with the hard decision value derived from the soft decision value, in the case where there is adopted a configuration in which the soft decision value is compared with the hard decision value every symbol. With respect to data that are not subjected to error correction, therefore, the same characteristic as that in the case where hard decision decoding has been carried out can be obtained.

In a radio communication receiving apparatus according to the next invention, the decision value combining unit includes: a soft decision value/hard decision value conversion unit which converts a soft decision value with a symbol taken as unit, received from the equalization unit to a hard decision value; a bit conversion unit which converts a hard decision value with a symbol taken as unit, output by the equalization unit to a hard decision value with a bit taken as unit; a comparison unit which compares hard decision values after the conversion with each other; and a selection unit which selects either the hard decision value or the soft decision value output by the equalization unit based on a result of the comparison, and outputs a decision value after the selection as a soft decision value.

According to this invention, the decision value combining unit selects either the soft decision value or the hard decision value every bit. As compared with the case where selection is conducted every symbol or every block, therefore, estimation of higher precision can be carried out.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the path metrics with a branch taken as unit.

According to this invention, the hard decision value is calculated based on the Viterbi algorithm (most likelihood estimation), and the soft decision value is calculated based on the path metric successively calculated by using the Viterbi algorithm. As compared with the case where the hard decision value and the soft decision value are calculated separately, therefore, the hard decision value and the soft decision value can be estimated with processing of a smaller scale.

In a radio communication receiving apparatus according to the next invention, the equalization unit includes: a second channel impulse response estimation unit which estimates a channel impulse response of the received signal; a replica generation unit which generates replicas of the received signal based on a value of estimation of the channel impulse response; a branch metric generation unit which calculates a branch metric based on the replicas and the received signal; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the survivor metrics.

According to this invention, the soft decision value is calculated base on as many survivor metrics as 1/Q of the number of path metrics. As compared with the configuration in which the soft decision value is calculated based on the path metric successively calculated by using the Viterbi algorithm, therefore, the number of processing steps can be remarkably reduced.

In a radio communication receiving apparatus according to the next invention, the replica generation unit further generates replicas of the received signal by using the path selection information besides the value of estimation of the channel impulse response.

According to this invention, the replica generation unit utilizes the path selection information (decision value). Therefore, the processing quantity required for replica generation can be remarkably reduced. Furthermore, in the case where the path selection information is utilized, the precision of the soft decision value is degraded. By combining the soft decision value with the hard decision value by using the decision value combining unit, the degradation of the soft decision value can be mitigated. Therefore, an excellent transmission quality can be ensured with a processing quantity of a comparatively small scale.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the survivor selection information is successively updated by using a known adaptive algorithm. Even in the case where the communication condition varies fast, therefore, communication of a high quality can be implemented.

In a radio communication receiving apparatus according to the next invention, the second channel impulse response estimation unit further receives the path selection information and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches whenever the value of estimation of the channel impulse response is updated.

According to this invention, the estimation value of the channel impulse response obtained from the hard decision value is updated successively by using a known adaptive algorithm. Even in the case where the communication condition varies fast, therefore, communication of a high quality can be implemented.

In a radio communication receiving apparatus according to the next invention, the second channel impulse response estimation unit further receives the hard decision value output by the hard decision sequence estimation unit and successively updates the channel impulse response of the received signal by using an adaptive algorithm, and the replica generation unit updates replicas of the received signal corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the second channel impulse response estimation unit further successively updates the channel impulse response of the received signal by taking a state as unit, based on the path selection information, and the replica generation unit updates replicas of the received signal corresponding to respective branches by using the path selection information whenever the channel impulse response with a state taken as the unit is updated.

According to this invention, the estimation value of the channel impulse response is updated by taking a survivor as the unit. Even in the case where the communication condition varies very fast, therefore, communication of high precision can be implemented.

In a radio communication receiving apparatus according to the next invention, the soft decision value generation unit includes: a symbol unit maximum likelihood metric selection unit which selects a maximum likelihood metric by taking a symbol as unit, based on the path metrics or the survivor metrics with a branch taken as unit; a bit-by-bit maximum likelihood metric selection unit which selects a maximum likelihood metric by taking a bit as unit, based on the maximum likelihood metric with a symbol taken as the unit; and a metric difference calculation unit which calculates a difference between the maximum likelihood metrics with a bit taken as the unit.

According to this invention, soft decision decoding can be conducted by using a soft decision value calculated by taking a bit as the unit. As compared with the case where the reliability is calculated by taking a symbol or a block as the unit, therefore, the communication quality can be improved remarkably.

In a radio communication receiving apparatus includes: an analog processing unit of P systems (P $\geq$ 1) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value. And the soft decision unit includes: an equalization unit which outputs a soft decision value and a hard decision value based on the received signals of the P systems; and a decision value combining unit which combines the soft decision value with the hard decision value according to a predetermined method, and outputs a decision value after the combining as a soft decision value.

According to this invention, a hard decision value obtained by using a demodulation scheme suitable for hard decision and a soft decision value obtained by using a demodulation scheme suitable for soft decision can be suitable selected. In addition, diversity reception is adopted. Therefore, the transmission quality can be further improved.

A radio communication receiving apparatus according to the next invention includes: an analog processing unit of P systems (P ≥ 1) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value. And the soft decision unit including: a noise power estimation unit which individually estimates noise power contained in the received signals of the P systems; an equalization unit which outputs a soft decision value and a hard decision value based on the received signals of the P systems and noise power estimation values of the P systems; and a decision value combining unit which combines the soft decision value with the hard decision value according to a predetermined method, and outputs a decision value after the combining as a soft decision value.

According to this invention, the noise power estimation unit is further included. For example, even in the case where the noise poser contained in the received signal varies, therefore, the variation of the noise poser can be corrected.

A radio communication receiving apparatus according to the next invention includes an analog processing unit of P systems (P ≥ 1) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value. And the soft decision unit includes: a level adjustment unit which individually conducts level adjustment on the received signals of the P systems; an equalization unit which outputs a soft decision value and a hard decision value based on the received signals of the P systems and level adjustment quantities of the P systems; and a decision value combining unit which combines the soft decision value with the hard decision value according to a predetermined method, and outputs a decision value after the combining as a soft decision value.

According to this invention, the level adjustment unit is further included. In the case where a level variation occurs in the received signal, therefore, the input level of the received signal can be adjusted so as to become a suitable level. A deviation of the soft decision value can be corrected by the adjustment.

In a radio communication receiving apparatus according to the next invention, the decision value combining unit includes: a soft decision value/hard decision value conversion unit which converts a soft decision value with a symbol taken as unit, received from the equalization unit to a hard decision value; a comparison unit which compares the hard decision value after the conversion with a hard decision value with a symbol taken as unit, received from the equalization unit; and a selection unit which selects either the hard decision value or the soft decision value output by the equalization unit based on a result of the comparison, and outputs a decision value after the selection as a soft decision value.

According to the present invention, the hard decision value completely coincides with the hard decision value derived from the soft decision value, in the case where there is adopted a configuration in which the soft decision value is compared with the hard decision value every symbol. With respect to data that are not subjected to error correction, therefore, the same characteristic as that in the case where hard decision decoding has been carried out can be obtained.

In a radio communication receiving apparatus according to the next invention, the decision value combining unit includes: a soft decision value/hard decision value conversion unit which converts a soft decision value with a symbol taken as unit, received from the equalization unit to a hard decision value; a bit conversion unit which converts a hard decision value with a symbol taken as unit, output by the equalization unit to a hard decision value with a bit taken as unit; a comparison unit which compares hard decision values after the conversion with each other; and a selection unit which selects either the hard decision value or the soft decision value output by the equalization unit based on a result of the comparison, and outputs a decision value after the selection as a soft decision value.

According to this invention, the decision value combining unit selects either the soft decision value or the hard decision value every bit. As compared with the case where selection is conducted every symbol or every block, therefore, estimation of higher precision can be carried out.

In a radio communication receiving apparatus according to the next invention, the equalization unit includes: a channel impulse response estimation unit which individually estimates channel impulse responses of the received signals of the P systems; a replica generation unit which generates replicas of the received signals of the P systems based on values of estimation of the channel impulse responses of the P systems; a branch metric generation unit which calculates a branch metric based on the replicas of the P systems and the received signals of the P systems; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the path selection information; and a soft decision value based on the path metrics with a branch taken as unit.

According to this invention, the hard decision value is calculated based on the Viterbi algorithm (most likehood estimation), and the soft decision value is calculated based on the path metric successively calculated by using the Viterbi algorithm. As compared with the case where the hard decision value and the soft decision value are calculated separately, therefore, the hard decision value and the soft decision value can be estimated with processing of a smaller scale.

In a radio communication receiving apparatus according to claim the next invention, the equalization unit includes : a channel impulse response estimation unit which individually estimates channel impulse responses of the received signals of the P systems; a replica generation unit which generates replicas of the received signals of the P systems based on values of estimation of the channel impulse responses of the P systems; a branch metric generation unit which calculates a branch metric based on the replicas of the P systems and the received signals of the P systems; an addition unit which adds the branch metric and a survivor metric, and outputs a result thereof as a path metric; a survivor selection unit which selects survivor metrics based on the path metrics with a branch taken as unit, and further generates path selection information that represents which path has been selected; a hard decision sequence estimation unit which estimates a hard decision value based on the path selection information; and a soft decision value generation unit which generates a soft decision value based on the path metrics with a branch taken as unit.

According to this invention, the soft decision value is calculated base on as many survivor metrics as 1/Q of the number of path metrics. As compared with the configuration in which the soft decision value is calculated based on the path metric successively calculated by using the Viterbi algorithm, therefore, the number of processing steps can be remarkably reduced.

In a radio communication receiving apparatus according to the next invention, the replica generation unit further generates replicas of the received signals by using the path selection information besides the value of estimation of the channel impulse responses.

According to this invention, the replica generation unit utilizes the path selection information (decision value). Therefore, the processing quantity required for replica generation can be remarkably reduced. Furthermore, in the case where the path selection information is utilized, the precision of the soft decision value is degraded. By combining the soft decision value with the hard decision value by using the decision value combining unit, the degradation of the soft decision value can be mitigated. Therefore, an excellent transmission quality can be ensured with a processing quantity of a comparatively small scale.

In a radio communication receiving apparatus according to the next invention, the channel impulse response estimation unit further receives the path selection information and successively updates the channel impulse responses of the received signals of the P systems by using an adaptive algorithm, and the replica generation unit updates replicas of the received signals of the P systems corresponding to respective branches whenever the values of estimation of the channel impulse responses are updated.

According to this invention, the estimation value of the channel impulse response obtained from the survivor selection information is successively updated by using a known adaptive algorithm. Even in the case where the communication condition varies fast, therefore, communication of a high quality can be implemented.

In a radio communication receiving apparatus according to the next invention, the channel impulse response estimation unit further receives the path selection information and successively updates the channel impulse responses of the received signals of the P systems by using an adaptive algorithm, and the replica generation unit updates replicas of the received signals corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the channel impulse response estimation unit further receives the hard decision value output by the hard decision sequence estimation unit and successively updates the channel impulse responses of the received signals of the P systems by using an adaptive algorithm, and the replica generation unit updates replicas of the received signals of the P systems corresponding to respective branches whenever the values of estimation of the channel impulse responses are updated.

According to this invention, the estimation value of the channel impulse response obtained from the hard decision value is updated successively by using a known adaptive algorithm. Even in the case where the communication condition varies fast, therefore, communication of a high quality can be implemented.

In a radio communication receiving apparatus according to the next invention, the channel impulse response estimation unit further receives the hard decision value output by the hard decision sequence estimation unit and successively updates the channel impulse responses of the received signals of the P systems by using an adaptive algorithm, and the replica generation unit updates replicas of the received signals of the P systems corresponding to respective branches at predetermined specific periods.

According to this invention, the updated estimation value of the channel impulse response is not reflected successively onto the replicas, but reflected intermittently. Therefore, the computation quantity required for the replica calculation can be remarkably reduced.

In a radio communication receiving apparatus according to the next invention, the channel impulse response estimation unit further successively updates the channel impulse responses of the received signals of the P systems by taking a state as unit, based on the path selection information, and the replica generation unit updates replicas of the received signals of the P systems corresponding to respective branches by using the path selection information whenever the channel impulse responses with a state taken as the unit are updated.

According to this invention, the estimation value of the channel impulse response is updated by taking a survivor as the unit. Even in the case where the communication condition varies very fast, therefore, communication of high precision can be implemented.

In a radio communication receiving apparatus according to the next invention, the branch metric generation unit calculates branch metrics based on the replicas of the P systems, the received signals of the P systems, and noise poser estimation values of the received signals of the P systems.

According to this invention, the variation of the noise poser can be corrected, even in the case where the noise poser contained in the received signal varies.

In a radio communication receiving apparatus according to the next invention, the branch metric generation unit calculates branch metrics based on the replicas of the P systems, the received signals of the P systems, and level adjustment quantities of the received signals of the P systems.

According to this invention, the input level of the received signal can be adjusted so as to become a suitable level, in the case where a level variation occurs in the received signal. A deviation of the soft decision value can be corrected by the adjustment.

In a radio communication receiving apparatus according to the next invention, the soft decision value generation unit includes: a symbol unit maximum likelihood metric selection unit which selects a maximum likelihood metric by taking a symbol as unit, based on the path metrics or the survivor metrics with a branch taken as unit; a bit-by-bit maximum likelihood metric selection unit which selects a maximum likelihood metric by taking a bit as unit, based on the maximum likelihood metric with a symbol taken as the unit; and a metric difference calculation unit which calculates a difference between the maximum likelihood metrics with a bit taken as the unit.

According to this invention, soft decision decoding can be conducted by using a soft decision value calculated by taking a bit as the unit. As compared with the case where the reliability is calculated by taking a symbol or a block as the unit, therefore, the communication quality can be improved remarkably.

A receiving method according to the next invention includes the steps of: outputting a soft decision value and a hard decision value based on the received signal; combining the soft decision value with the hard decision value according to a predetermined method, and outputting a decision value after the combining as a soft decision value; estimating noise power contained in the received signal; and correcting the soft decision value after combining according to a noise power estimation value.

According to this invention, a hard decision value obtained by using a demodulation scheme suitable for hard decision and a soft decision value obtained by using a demodulation scheme suitable for soft decision can be suitable selected. Even in the case where the encoding factor of the error correction is close to unity or there are data that are not subjected to the error correction, therefore, the best transmission quality can be provided at all times. Furthermore, the noise power estimation step is included. For example, even in the case where the noise poser contained in the received signal varies, therefore, the variation of the noise poser can be corrected.

A receiving method according to the next invention includes the steps of: conducting a level adjustment on the received signal; outputting a soft decision value and a hard decision value based on the received signal after the level adjustment; combining the soft decision value with the hard decision value according to a predetermined method, and outputting a decision value after the combining as a soft decision value; and correcting the soft decision value after the combining according to a level adjustment quantity.

According to this invention, the level adjustment step is included. In the case where a level variation occurs in the received signal, therefore, the input level of the received signal can be adjusted so as to become a suitable level. A deviation of the soft decision value can be corrected by the adjustment.

A receiving method according to the next invention includes the steps of: outputting a soft decision value and a hard decision value based on the received signal; estimating noise power contained in the received signal; correcting the soft decision value according to a noise power estimation value; and combining the soft decision value after the correction with the hard decision value according to a predetermined method, and outputting a decision value after the combining as a soft decision value.

According to this invention, the noise power estimation step is included. For example, even in the case where the noise poser contained in the received signal varies, therefore, the variation of the noise poser can be corrected.

A receiving method includes the steps of: conducting a level adjustment on the received signal; outputting a soft decision value and a hard decision value based on the received signal after the level adjustment; correcting the soft decision value according to a level adjustment quantity; and combining the soft decision value after the correction with the hard decision value according to a predetermined method, and outputting a decision value after the combining as a soft decision value.

According to this invention, the level adjustment step is included. In the case where a level variation occurs in the received signal, therefore, the input level of the received signal can be adjusted so as to become a suitable level. A deviation of the soft decision value can be corrected by the adjustment.

A receiving method according to the next invention includes the steps of: outputting a soft decision value and a hard decision value based on the received signals of the P systems; and combining the soft decision value with the hard decision value according to a predetermined method, and outputting a decision value after the combining as a soft decision value.

According to this invention, a hard decision value obtained by using a demodulation scheme suitable for hard decision and a soft decision value obtained by using a demodulation scheme suitable for soft decision can be suitable selected. In addition, diversity reception is adopted. Therefore, the transmission quality can be further improved.

A receiving method according to the next invention includes the steps of: individually estimating noise power contained in the received signals of the P systems; outputting a soft decision value and a hard decision value based on the received signals of the P systems and estimation values of noise power of the P systems; and combining the soft decision value with the hard decision value according to a predetermined method, and outputting a decision value after the combining as a soft decision value.

According to this invention, the noise power estimation step is included. For example, even in the case where the noise poser contained in the received signal varies, therefore, the variation of the noise poser can be corrected.

A receiving method according to the next invention includes the steps of: individually conducting level adjustment on the received signals of the P systems; outputting a soft decision value and a hard decision value based on the received signals of the P systems and level adjustment quantities; and combining the soft decision value with the hard decision value according to a predetermined method, and outputting a decision value after the combining as a soft decision value.

According to this invention, the level adjustment step is further included. In the case where a level variation occurs in the received signal, therefore, the input level of the received signal can be adjusted so as to become a suitable level. A deviation of the soft decision value can be corrected by the adjustment.

BRIEF DESCRIPTION OF DRAWING

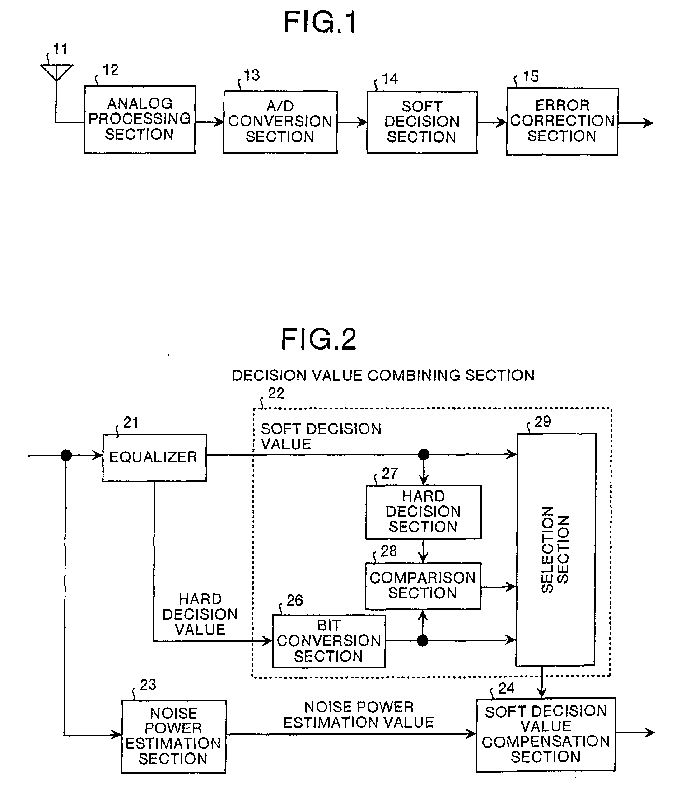

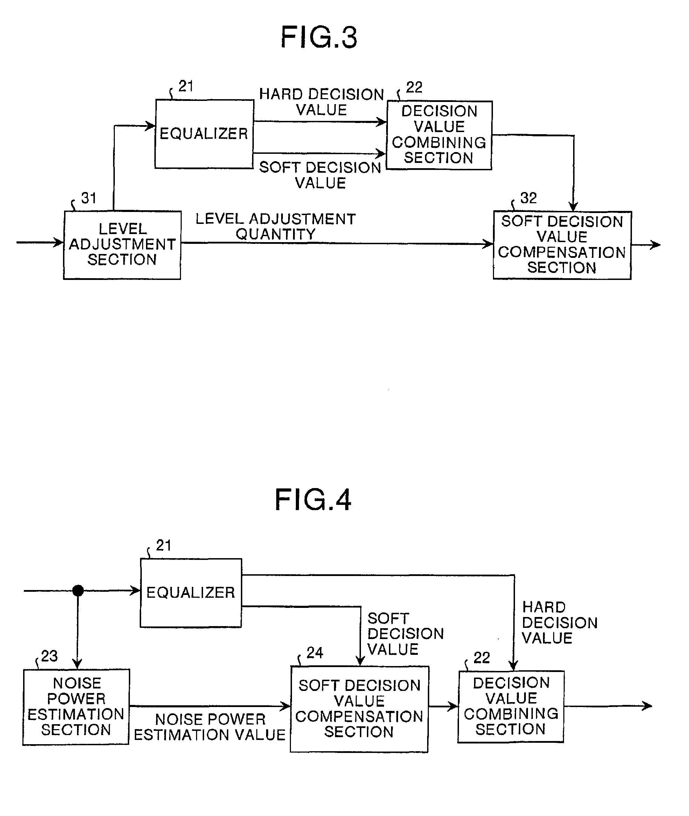

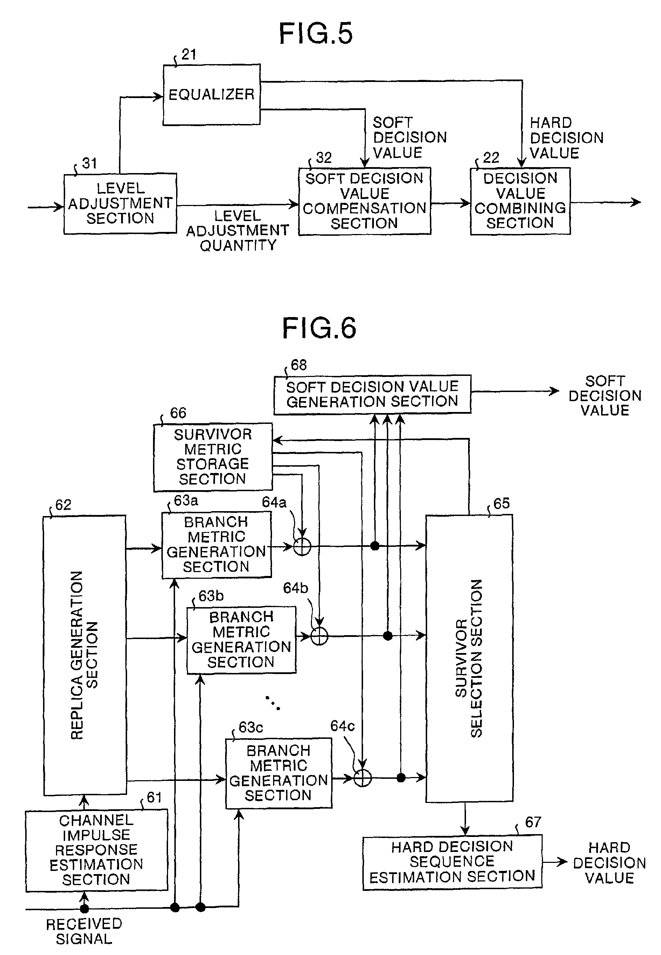

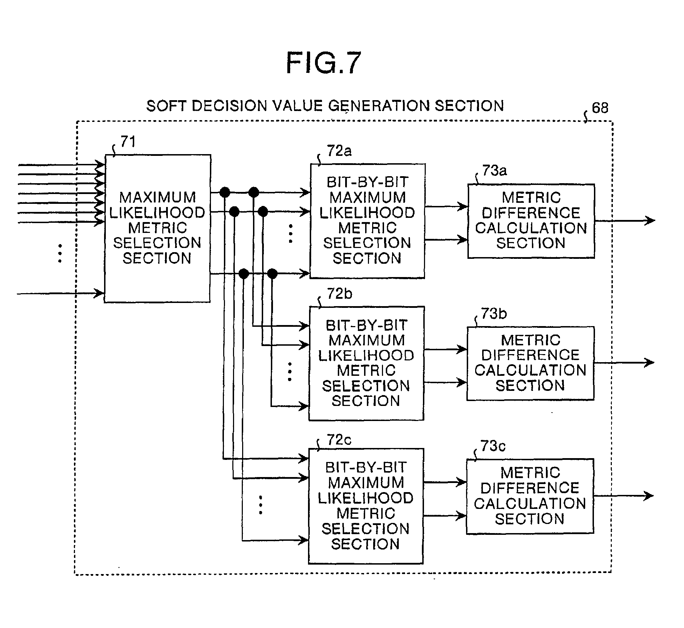

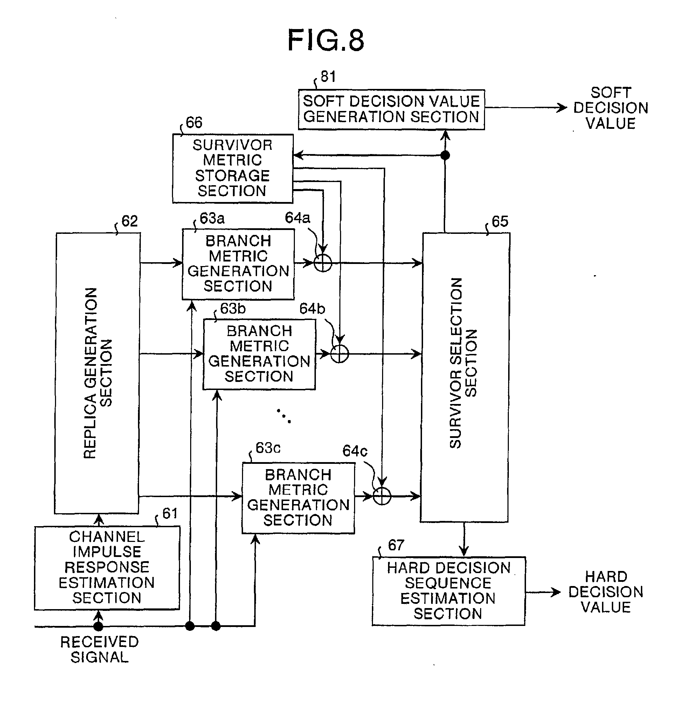

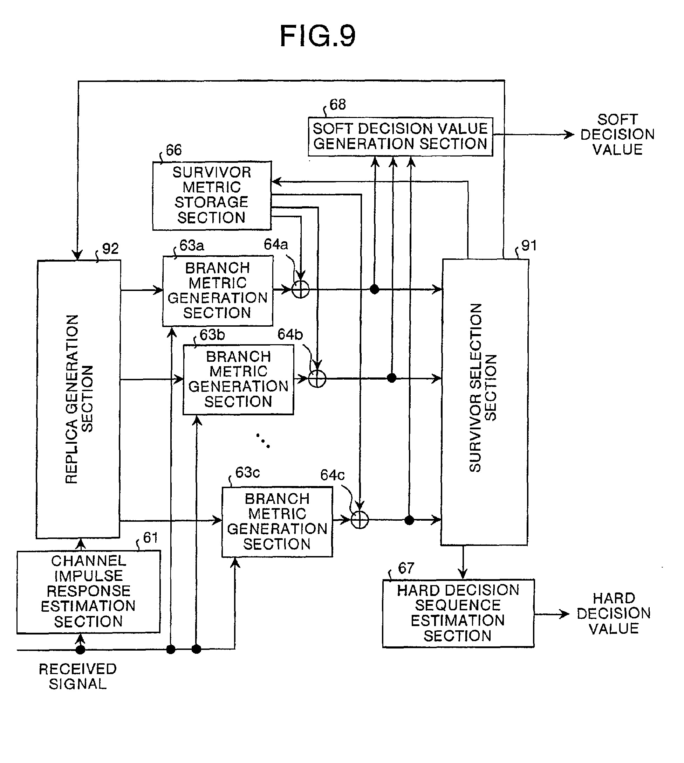

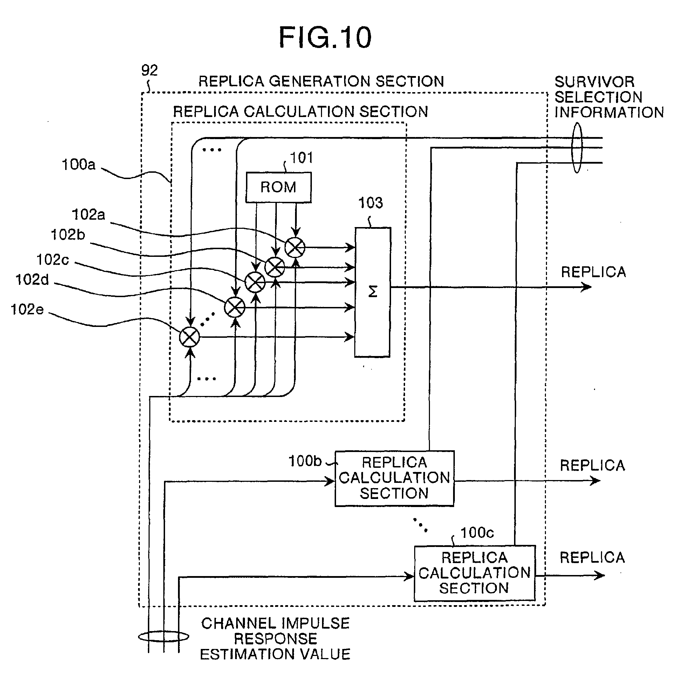

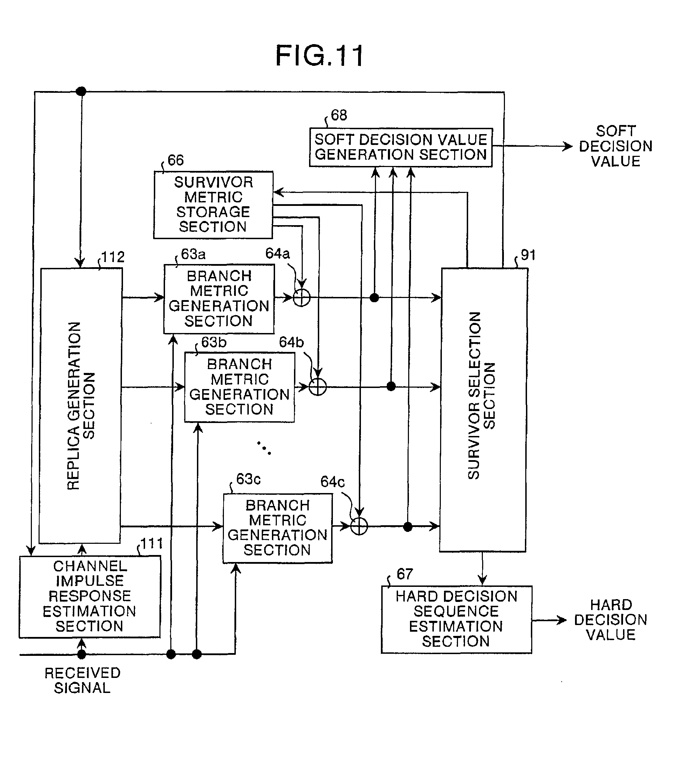

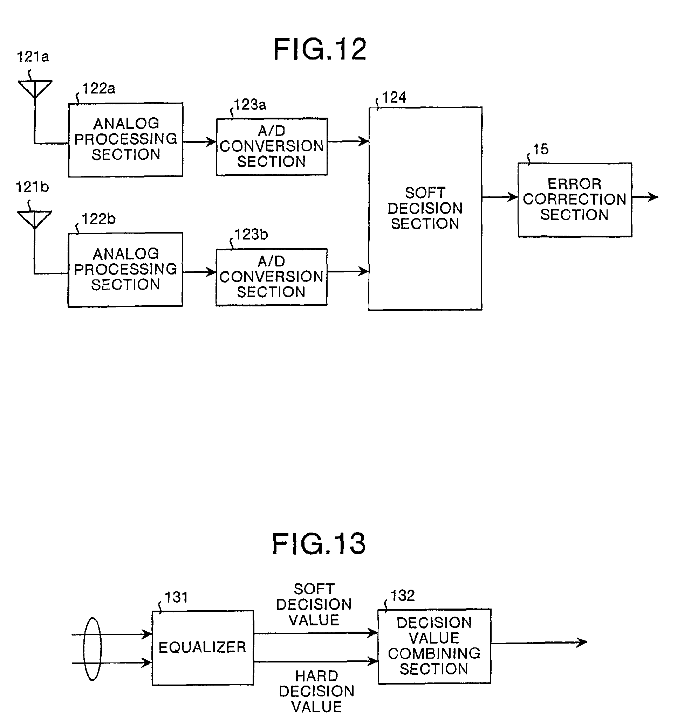

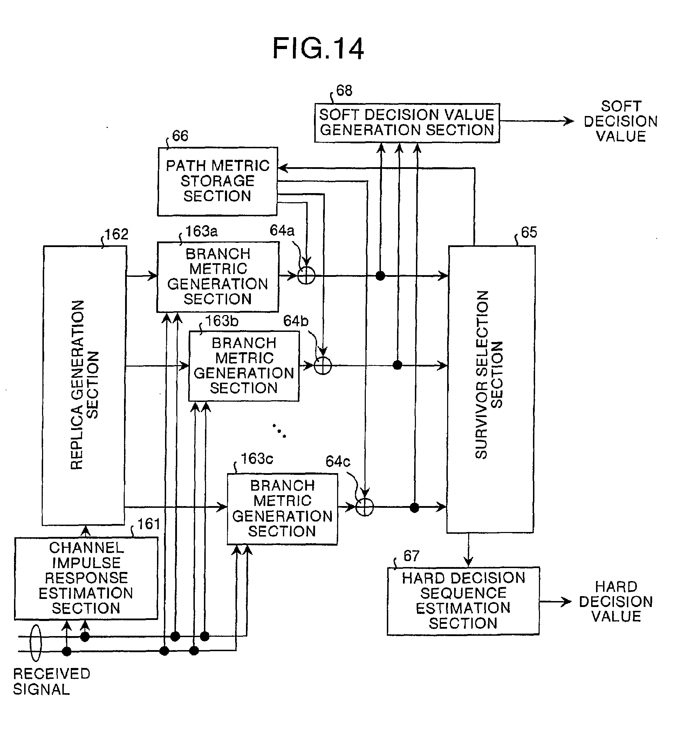

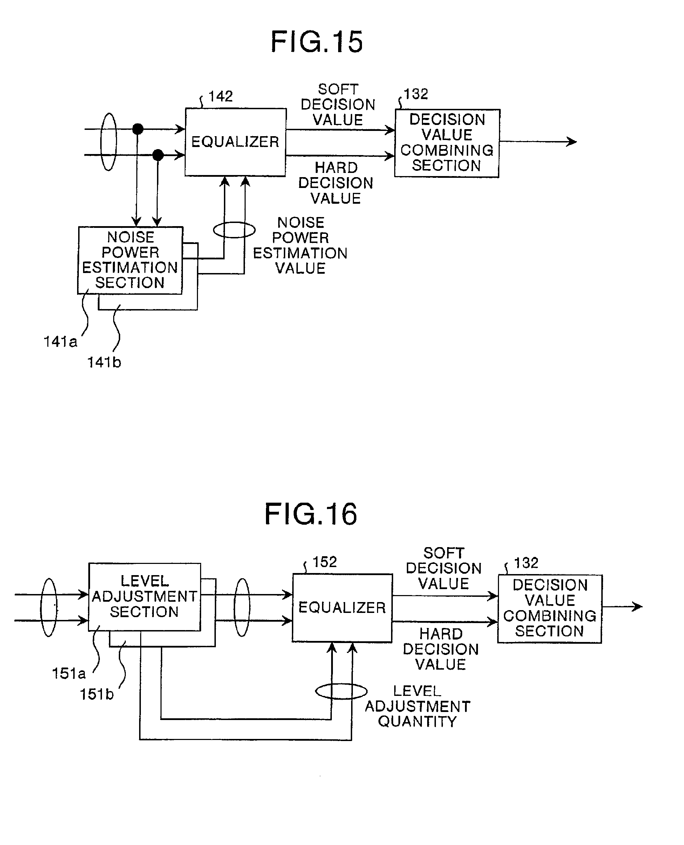

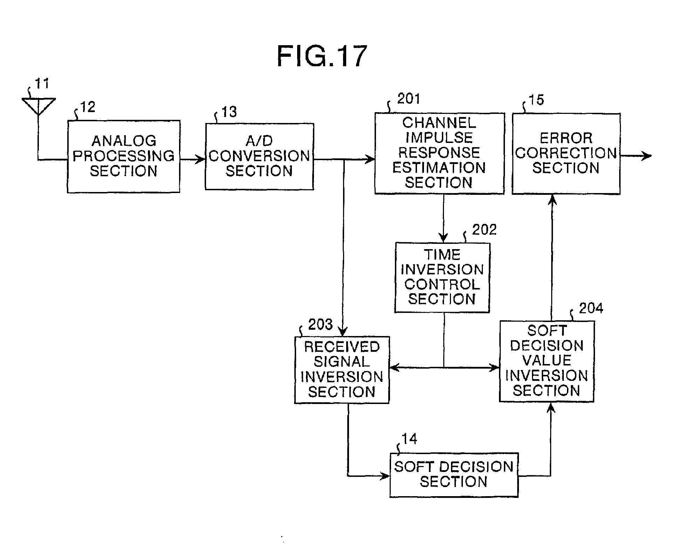

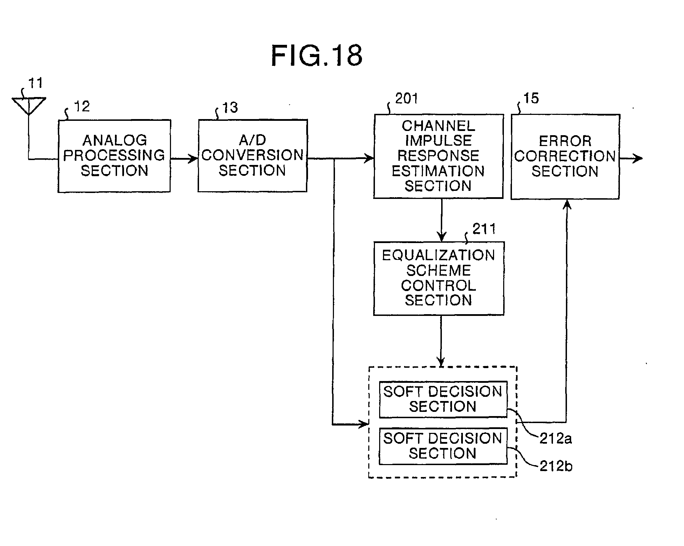

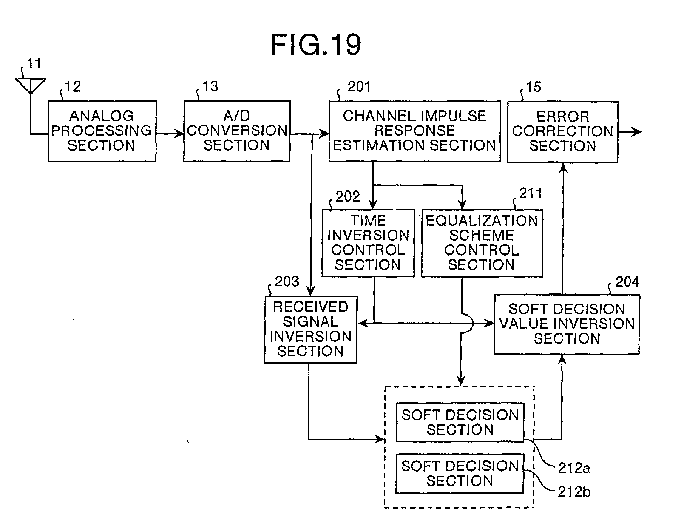

Fig. 1 is a diagram showing a configuration of a first embodiment of a radio communication receiving apparatus according to the present invention; Fig. 2 is a diagram showing a first configuration example of a soft decision section; Fig. 3 is a diagram showing a second configuration example of a soft decision section; Fig. 4 is a diagram showing a third configuration example of a soft decision section; Fig. 5 is a diagram showing a fourth configuration example of a soft decision section; Fig. 6 is a diagram showing a first configuration example of an equalizer; Fig. 7 is a diagram showing a configuration of a soft decision value generation section; Fig. 8 is a diagram showing a second configuration example of an equalizer; Fig. 9 is a diagram showing a third configuration example of an equalizer; Fig. 10 is a diagram showing a configuration of a replica generation section; Fig. 11 is a diagram showing a fourth configuration example of an equalizer; Fig. 12 is a diagram showing a configuration of a second embodiment of a radio communication receiving apparatus according to the present invention; Fig. 13 is a diagram showing a first configuration example of a soft decision section; Fig. 14 is a diagram showing a configuration of an equalizer; Fig. 15 is a diagram showing a second configuration example of a soft decision section; Fig. 16 is a diagram showing a third configuration example of a soft decision section; Fig. 17 is a diagram showing a configuration of a third embodiment of a radio communication receiving apparatus according to the present invention; Fig. 18 is a diagram showing a configuration of a fourth embodiment of a radio communication receiving apparatus according to the present invention; and Fig. 19 is a diagram showing another configuration of the fourth embodiment of a radio communication receiving apparatus according to the present invention.

BEST MODE FOR CARRYING OUT THE INVENTION

The present invention will be described in more detail by referring to accompanying drawing.

Fig. 1 is a diagram showing a configuration of a first embodiment of a radio communication receiving apparatus (hereafter referred to simply as receiving apparatus) according to the present invention. In Fig. 1, numeral 11 denotes an antenna, 12 an analog processing section, 13 an analog/digital (A/D) conversion section, 14 a soft decision section, and 15 an error correction section. It is now supposed that processing such as encoding is conducted on a transmitting side, and it is premised that a training sequence already known to a receiving side is contained in apart of a transmission signal. Furthermore, the case where 8PSK is utilized as the modulation scheme will be described. By the way, a 3-bit signal can be transmitted by one symbol in the 8PSK.

Operation of the receiving apparatus having the above-described configuration will now be described briefly. First, upon receiving a received wave via the antenna 11, the analog processing section 12 conducts processing such as band limiting and down converting, and converts the received wave to a baseband analog signal. Upon receiving the analog signal, the A/ D conversion section 13 converts the analog signal to a digital received signal (hereafter referred to simply as received signal) . Upon receiving the received signal, the soft decision section 14 demodulates the received signal and calculates a soft decision value as a result of the demodulation. Finally, the error correction section 15 conducts error correction such as de-interleaving and decoding on the soft value that it has received.

A configuration and operation of the soft decision section 14 will now be described in detail. Fig. 2 is a diagram showing a first configuration example of the soft decision section 14. In Fig. 2, numeral 21 denotes an equalizer, 22 a decision value combining section, 23 a noise power estimation section, 24 a soft decision value compensation section, 26 a bit conversion section, 27 a hard decision section, 28 a comparison section, and 29 a selection section.

First, the equalizer 21 estimates a soft decision value and a hard decision value on the basis of the received signal it has received. Subsequently, the decision value combining section 22 conducts synthesis processing on the soft decision value and the hard decision value output by the equalizer 21, and outputs its result as a soft decision value. By the way, in the present embodiment, the equalizer 21 outputs, for example, a soft decision value with a bit taken as the unit and a soft decision value with a symbol taken as the unit. On the other hand, the noise power estimation section 23 estimates noise power by utilizing a training sequence contained in the received signal it has received and using a known technique. Finally, the soft decision value compensation section 24 corrects the soft decision value by dividing the soft decision value by the estimated value of the noise power output by the noise power estimation section 23, and outputs a result of the correction to the error correction section 15 as an output of the soft decision section 14.

Detailed operation of the decision value combining section 22 will now be described. First, the bit conversion section 26 converts the hard decision value output by the equalizer 21 to a hard decision value with a bit taken as the unit. For example, in the case where a symbol assumes any of {0, 1, 2, 3, 4, 5, 6, 7}, and

> symbol "0" corresponds to three bits of "+1", "+1" and "+1",
> symbol "1" corresponds to three bits of "+1", "+1" and "-1",
> symbol "2" corresponds to three bits of "+1", "-1" and "+1",
> symbol "3" corresponds to three bits of "+1", "-1" and "-1",
> symbol "4" corresponds to three bits of "-1", "+1" and "+1",
> symbol "5" corresponds to three bits of "-1", "+1" and "-1",
> symbol "6" corresponds to three bits of "-1", "-1" and "+1", and
> symbol "7" corresponds to three bits of "-1", "-1" and "-1",

the bit conversion section 26 converts the hard decision values with a symbol taken as the unit to hard decision values each having three bits according to the correspondence.

On the other hand, the hard decision section 27 judges the soft decision value output by the equalizer 21 to be "+1" when it is equal to "0" or more, and judges the soft decision value output by the equalizer 21 to be "-1" when it is less than "0." The hard decision section 27 outputs those results.

The comparison section 28 compares the hard decision value output by the bit conversion section 26 with the hard decision value output by the hard decision section 27. The comparison section 28 outputs either "coincidence" or "non-coincidence" in values of respective bits as a comparison result. Finally, the selection section 29 receives the soft decision value output by the equalizer 21, the hard decision value output by the bit converter 26, and the comparison result output by the comparison section 28. For example, in the case where the comparison result is "coincidence," the selection section 29 selects the soft decision value. On the other hand, in the case where the comparison result is "non-coincidence," the selection section 29 selects the hard decision value. The selection section 29 outputs the selected decision value as a soft decision value.

If the soft decision section 14 shown in Fig. 2 is used, the hard decision value obtained by using a demodulation scheme suitable for the hard decision and the soft decision value obtained by using a demodulation scheme suitable for the soft decision can be selected suitably. Even in the case where the encoding factor of the error correction is close to unity, or in the case where there are data that are not subjected to error correction, therefore, the best transmission quality can always be implemented. Furthermore, the soft decision section 14 shown in Fig. 2 includes the noise power estimation section 23. For example, even in the case where the power of noise contained in the received signal varies, therefore, the variation of the noise power can be corrected.

In addition, in the soft decision section 14 shown in Fig. 2, the decision value combining section 22 selects either the soft decision value or the hard decision value by taking a bit as the unit. As compared with the case where a symbol is taken as the unit or a block is taken as the unit, therefore, estimation of higher precision can be carried out. The configuration in which the soft decision value is compared with the hard decision value by taking a bit as the unit has been described. The configuration is not limited to this, but a configuration in which the soft decision value is compared with the hard decision value by taking a symbol as the unit may also be used. In this case, the hard decision value completely coincide with the hard decision value derived from the soft decision value output by the selection section 29. Therefore, there can be obtained the same characteristic as those in the case hard decision decoding is conducted on data that are not subjected to error correction.

Fig. 3 is a diagram showing a second configuration example of the soft decision section 14. In Fig. 3, numeral 31 denotes a level adjustment section. A configuration similar to that of Fig. 2 is denoted by like reference numerals, and description thereof will be omitted.

First, the level adjustment section 31 conducts level adjustment on the received signal it has received, outputs the received signal subjected to the level adjustment to an equalizer 21, and in addition outputs a level adjustment quantity at that time to a soft decision value compensation section 32. The soft decision value compensation section 32 receives a soft decision value output by a decision value combining section 22 and a level adjustment quantity output by the level adjustment section 31, and conducts correction of the soft decision value. For example, in the case where the level adjustment section 31 has conducted a level adjustment of a received signal according to an equation (1), the soft decision value compensation section 32 conducts correction on a soft decision value,

$$r'(n) = r(n) \times A(n) \qquad (1)$$

$$s'(n) = s(n)/(A(n) \times A(n)) \qquad (2)$$

where r(n) represents a received signal at time n, r'(n) a received signal after a level adjustment at time n, A(n) a level adjustment quantity at time n, s (n) a soft decision value before a correction at time n, and s'(n) a soft decision value after a correction at time n.

The processing of the level adjustment section 31 can be conducted in the analog processing section 12 instead of the soft decision section 14. In addition, there may be adopted a configuration in which the processing of the level adjustment section 31 can be conducted in both the analog processing section 12 and the soft decision section 14. In this case, the soft decision value is corrected by both level adjustment quantities.

If the soft decision section 14 shown in Fig. 3 is thus used, then there is obtained an effect similar to that obtained when the configuration of Fig. 2 is used. In addition, in the case where a level variation occurs in the received signal, the input level of the received signal can be adjusted to a suitable level. By the adjustment, a deviation of the soft decision value can be corrected.

Fig. 4 is a diagram showing a third configuration example of the soft decision section 14 . First, an equalizer 21 estimates the soft decision value and the hard decision value on the basis of the received signal it has received. On the other hand, a noise power estimation section 23 estimates the noise power by utilizing the training sequence contained in the received signal it has received. Subsequently, a soft decision value compensation section 24 corrects the soft decision value output by the equalizer 21 by using the estimated value of the noise power output by the noise power estimation section 23. Finally, a decision value combining section 22 selects either the soft decision value output by the soft decision value compensation section 24 or the hard decision value output by the equalizer 21 in the same way as the foregoing description, and outputs a result of the selection to the error correction section 15 as a soft decision value output by the soft decision section 14.

Even in the case where the correction position of the soft decision value is altered, the best transmission quality can thus be accomplished in the soft decision section 14 shown in Fig. 4 at all times in the same way as the case where Fig. 2 is used.

Fig. 5 is a diagram showing a fourth configuration example of the soft decision section 14. First, a level adjustment section 31 conducts level adjustment on a received signal it has received, outputs the received signal subjected to the level adjustment to an equalizer 21, and in addition outputs a level adjustment quantity at that time to a soft decision value compensation section 32. Subsequently, the equalizer 21 receives the received signal output by the level adjustment section 31, and estimates the soft decision value and the hard decision value, respectively. Subsequently, the soft decision value compensation section 32 receives the soft decision value output by the equalizer 21 and the level adjustment quantity output by the level adjustment section 31, and corrects the soft decision value according to the level adjustment quantity. Finally, a decision value combining section 22 selects either the soft decision value output by the soft decision value compensation section 32 or the hard decision value output by the equalizer 21 in the same way as the foregoing description, and outputs a result of the selection to the error correction section 15 as a soft decision value output by the soft decision section 14.

Even in the case where the correction position of the soft decision value is altered, the best transmission quality can thus be accomplished in the soft decision section 14 shown in Fig. 5 at all times in the same way as the case where Fig. 3 is used.

A configuration and operation of the equalizer 21 shown in Figs. 2 to 5 will now be described in detail. Fig. 6 is a diagram showing a first configuration example of the equalizer 21. In Fig. 6, 61 denotes a channel impulse response estimation section, 62 a replica generation section, 63a, 63b, ... , 63c branch metric generation sections, 64a, 64b, ... , 64c adders, 65 a survivor selection section, 66 a survivor metric storage section, 67 a hard decision system estimation section, and 68 a soft decision value generation section.

Here, update of survivors and survivor metrics is conducted on the basis of the Viterbi algorithm. In the ensuing description, it is supposed that the number of past symbols (memory length) that exert influences due to inter-symbol interference is L and the number of states is M.

The term "state" refers to a candidate of a symbol sequence formed of a combination of past symbols that exert influences on the current received signal. Supposing that a Q-valued signal is used, the number M of states becomes $Q^L$. For example, in the case where 8PSK is used, Q = 8. In the case where L = 1, therefore, M = 8. In the case where L = 2, M = 64. In addition, a candidate of a symbol sequence having (L + 1) symbols formed of a combination of past symbols that influence the current received signal and the current symbol is called "branch, " and it corresponds to a transition between states on a trellis chart. Supposing that a Q-valued signal is used, therefore, the number of branches becomes $Q^{(L+1)}$.

In the equalizer 21 having the above-described configuration, first the channel impulse response estimation section 61 calculates an estimation value of a transmission characteristic according to the known technique by utilizing a training sequence contained in the received signal it has received. The estimation value of the channel impulse response is hereafter referred to simply as channel impulse response.

The replica generation section 62 receives the channel impulse response output by the channel impulse response estimation section 61, calculates replicas corresponding to (8 × M) branches (corresponding to an estimation value of the received signal) by using an equation (3), and outputs replicas x(i) to corresponding branch metric generation sections 63a to 63c. The replica generation section 62 stores the current replica until the next replica is calculated.

$$x(i) = \Sigma \, h\,(j) \times l'\,(L\text{-}j,\, i) \qquad (3)$$

In the equation (3), $\Sigma$ represents the sum total for j = 0, ... , L, and i represents a branch number. Here, calculation is conducted for each of branches i = 1, 2, ... , (8 × M). Furthermore, x(i) represents a replica corresponding to an ith branch (some of the branch metric generation sections 63a to 63c), and h(j) represents a channel impulse response corresponding to a symbol delayed by j symbols, whereas h(0) represents a channel impulse response corresponding to a symbol that arrives without a delay. Furthermore, l'(j,i) represents a jth symbol of a symbol sequence corresponding to an ith branch.

After the replica calculation, (8 × M) branch metric generation sections 63a to 63c receive the received signal and the replicas output by the replica generation section 62, and calculate branch metrics according to an equation (4),

$$e(n,\, i)=\text{-}|r(n)\text{-}x(i)|^{2} \qquad (4)$$

where |a| represents an absolute value of a complex number a, and e(n, i) represents a branch metric output by an ith branch metric generation section at time n.

The calculation method of the branch metrics are not restricted to the equation (4). For example, a method utilizing the Manhattan distance as in an equation (5) or other methods may be utilized.

$$e(n,\, i)=\text{-}|r(n)\text{-}x(i)| \qquad (5)$$

After calculation of branch metrics as described above, each of i adders 64a to 64c (i = 1, ... , (8 × M) ) adds the branch metric output by each branch metric generation section and the survivor metric stored in the survivor metric storage section 66, and calculates the path metric corresponding to each branch.

After calculating the path metric corresponding to each branch, the survivor selection section 65 selects path metrics corresponding toM states from among the path metrics output by the adders 64a to 64c, and outputs the result to the survivor metric storage section 66 as survivor metrics. At this time, the survivor metric storage section 66 newly stores survivor metrics corresponding to the M states output by the survivor selection section 65. Furthermore, the survivor selection section 65 outputs path selection information, which represents information as to "which path has been selected, " to the hard decision sequence estimation section 67.

Finally, the hard decision sequence estimation section 67 stores the path selection information output by the survivor selection section 65, and determines the hard decision value by following a survivor in a direction opposite to the time. And the soft decision value generation section 68 receives path metrics output by the i adders 64a to 64c, and calculates a soft decision value from them.

Detailed operation of the soft decision value generation section 68 will now be described. Fig. 7 is a diagram showing a configuration of the soft decision value generation section 68. In Fig. 7, 71 denotes a maximum likely metric selection section, 72a, 72b and 72c bit-by-bit maximum likelihood metric selection sections, and 73a, 73b and 73c metric difference calculation sections.

First, the symbol unit maximum likelihood metric selection section 71 receives path metrics output by the i adders 64a to 64c, selects a path metric having a greatest value from among path metrics that coincide in I'(0, i), and outputs the path metric as the maximum likelihood metric corresponding to I'(0, i). I'(0, i) is a first symbol of a symbol sequence corresponding to the state. Therefore, the number of the maximum likelihood metrics output by the maximum likelihood metric selection section 71 becomes Q in the case of a Q-valued signal. To be concrete, supposing that 8PSK is used, it follows that Q = 8. Eight maximum likelihood metrics respectively corresponding to I'(0, i) = 0, 1, 2, 3, 4, 5, 6 and 7 are output.

Each of the bit-by-bit maximum likelihood metric selection sections 72a, 72b and 72c receives the maximum likelihood metrics output by the symbol unit maximum likelihood metric selection section 71, selects a maximum likelihood metric having a greatest value from among maximum likelihood metrics that coincide in the ith bit, and outputs the path metric as the maximum likelihood metric with a bit taken as the unit. Therefore, the bit-by-bit maximum likelihood metric selection sections 72a to 72c output bit-by-bit maximum likelihood metrics having "+1" in a noticed bit and bit-by-bit maximum likelihood metrics having "-1" in a noticed bit.

The metric difference calculation sections 73a, 73b and 73c receive the maximum likelihood metrics with a bit taken as the unit output by the bit-by-bit maximum likelihood metric selection sections 72a, 72b and 72c, subtract the maximum likelihood metric having "-1" in a noticed bit from the maximum likelihood metric having "+1" in a noticed bit, and output a result thereof as a soft decision value with a bit taken as the unit. In the case where Q = 2, the soft decision value generation section 68 does not need the bit-by-bit maximum likelihood metric selection sections 72a, 72b and 72c.

If the equalizer 21 shown in Fig. 6 is thus used, then a hard decision value is calculated on the basis of the Viterbi algorithm (most likelihoodsequenceestimation), and a soft decision value is calculated on the basis of path metrics calculated one by one in the Viterbi algorithm. As compared with the case where the hard decision value and the soft decision value are calculated separately, therefore, the hard decision value and the soft decision value can be estimated with processing of a smaller scale. Furthermore, if the soft decision value generation section 68 shown in Fig. 7 is used, soft decision decoding can be conducted by using the soft decision value calculated while taking a bit as the unit. As compared with the case where reliability is calculated by taking a symbol or a block as the unit, therefore, the communication quality can be improved remarkably.

Fig. 8 is a diagram showing a second configuration example of the equalizer 21. In Fig. 8, 81 denotes a soft decision value generation section that is different in operation from the above-described soft decision value generation section 68. Components similar to those of Fig. 6 are denoted by like characters, and description thereof will be omitted.

Here, the soft decision value generation section 81 receives survivor metrics corresponding to M states output by the survivor selection section 65 instead of the path metrics output by the i adders 64a to 64c. In this case, the soft decision value generation section 81 selects a path metric having a greatest value from among path metrics that coincide in I'(1, i), and outputs the path metric as the maximum likelihood metric corresponding to each I'(1, i).

If the equalizer 21 shown in Fig. 8 is thus used, then the soft decision value is calculated on the basis of as many survivor metrics as 1/Q of the number of path metrics. Therefore, the number of processing steps can be remarkably reduced as compared with the configuration of Fig. 6, in which the soft decision value is calculated on the basis of path metrics calculated one by one by the Viterbi algorithm.

Fig. 9 is a diagram showing a third configuration example of the equalizer 21. In Fig. 9, 91 denotes a survivor selection section that is different in operation from the above-described survivor selection section 65, and 92 denotes a replica generation section that is different in operation from the above-described replica generation section 62. Components similar to those of Figs. 6 and 8 are denoted by like characters, and description thereof will be omitted.

For example, in the equalizer shown in Fig. 6, the number M of states is $Q^L$. Here, however, the number M of states is supposed to be $Q^V$ (where V is an integer satisfying the relation $0 < V < L$) . In this case, I' (L - V, i) to I' (L, i) correspond to branches in one-to-one correspondence. As fon I' (0, i) to I' (L-V-1, i), results of selection conducted in the survivor selection section 91 are utilized. In other words, the survivor selection section 91 outputs the path selection information to not only the hard decision sequence estimation section 67 but also the replica generation section 92. The replica generation section 92 calculates replicas one by one on the basis of the path selection information.

Detailed operation of the replica generation section 92 will now be described. Fig. 10 is a diagram showing a configuration of the replica generation section 92. In Fig. 10, 100a, 100b, ... , 100c denote replica calculation sections, 101 a ROM, 102a, 102b, 102c, 102d, ... , 102e multipliers, and 103 an addition section.

First, each of i replica calculation sections 100a - 100c (i = 1, 2, ... , (8 × M)) calculates a replica corresponding to an ith branch by using an equation (6),

$$X(i)= \Sigma\ h\ (j) \times I'\ (L-j, i) \qquad (6)$$

where $\Sigma$ represents the sum total for j = 0, ..., L.

To be concrete, the ROM 101 outputs a fixed symbol sequence ranging from I' (L - V, i) to I' (L, i) of the equation (6). Subsequently, (V + 1) multipliers 102a to 102c calculate products of I'(L, i) to I'(L - V, i) output by the ROM 101 and channel impulse responses h(0) to h(V) output by the channel impulse response estimation section 61, respectively. Furthermore, remaining multipliers 102d to 102e calculate products of I'(L - V - 1, i) to I' (L, i) output by the survivor selection section 91 and channel impulse responses h(V + 1) to h(L) output by the channel impulse response estimation section 61, respectively. Finally, the addition section 103 conducts computation corresponding to $\Sigma$ of the equation (6), and outputs a result thereof to each branch metric generation section as a replica.

If the equalizer 21 shown in Fig. 9 is thus used, then the replica generation section 92 utilizes the path selection information (decision value). Therefore, the processing quantity required for replica generation can be reduced remarkably. In the case where the path selection information is utilized, the precision of the soft decision value is degraded. As described above, however, the degradation of the soft decision value can be mitigated by combining the hard decision value with the soft decision value in the decision value combining section 22. Therefore, an excellent transmission quality can be ensured with a processing quantity of a relatively small scale. In the equalizer 21 shown in Fig. 9, the soft decision value generation section 81 shown in Fig. 8 may be utilized instead of the soft decision value generation section 68.

Fig. 11 is a diagram showing a fourth configuration example of the equalizer 21. In Fig. 11, 111 denotes a channel impulse response estimation section 61 that is different in operation from the above-described channel impulse response estimation section 61, and 112 denotes a replica generation section that is different in operation from the above-described replica generation sections 62 and 92. Components similar to those of Fig. 9 are denoted by like characters, and description thereof will be omitted.

For example, the survivor selection information output by the survivor selection section 91 is input to the channel impulse response estimation section 111. In the channel impulse response estimation section 111, the channel impulse response is updated by taking a state as the unit as described in KUBO et al, "An Adaptive Maximum-Likelihood Sequence Estimator for Fast Time-Varying Intersymbol Interference Channels", IEEE Trans. on comm, vol. 42, no 2/3/4 (1994). In an interval corresponding to the training sequence, an estimation value of the channel impulse response is calculated and used as an initial value of an estimation value of a channel impulse response corresponding to each state in the same way as the channel impulse response estimation section 61 of the configuration example of Fig. 9.

The replica generation section 112 receives the estimation value of the channel impulse response corresponding to each output that is output by the channel impulse response estimation section 111 and the survivor selection information output by the survivor selection section 91, and updates replicas corresponding to respective branches one by one.

If the equalizer 21 shown in Fig. 11 is thus used, then the estimation value of the channel impulse response is updated by taking a survivor as the unit. Even in the case where the communication condition varies very fast, communication of high precision can be implemented.

As application examples of the equalizer 21 shown in Fig. 11, for example, the following four configurations can be considered. First, as a first application example, for example, the channel impulse response estimation section 111 receives the received signal and the survivor selection information output by the survivor selection section 91, and updates the estimation value of the channel impulse response by using a known adaptive algorithm such as the LMS algorithm and the RLS algorithm. In this case, the replica generation section 112 successively updates replicas corresponding to respective branches on the basis of the estimation value of the channel impulse response common to states instead of taking a state as the unit. In the first application example, the estimation value of the channel impulse response obtained from the survivor selection information is thus updated successively by using a known adaptive algorithm. Even in the case where the communication condition varies fast, therefore, communication of high quality can be implemented.

As a second application example, the channel impulse response estimation section 111 receives the received signal and the survivor selection information, and updates the estimation value of the channel impulse response by using the known adaptive algorithm in the same way as the foregoing description. And the replica generation section 112 updates the replica at intervals of a certain fixed period instead of updating the replica whenever the estimation value of the channel impulse response is updated. Thus in the second application example, further the estimation value of the updated channel impulse response is not reflected to the replica successively, but reflected to the replica intermittently. As compared with the first application example, the computation quantity required for replica calculation can be reduced.

As a third application example, the channel impulse response estimation section 111 receives the received signal and the hard decision value output by the hard decision sequence estimation section 67, and updates the estimation value of the channel impulse response by using the known adaptive algorithm. In this case, the replica generation section 112 successively updates replicas corresponding to respective branches on the basis of the estimation value of the channel impulse response common to states instead of taking a state as the unit. In the third application example, the estimation value of the channel impulse response obtained from the hard decision value is thus updated successively by using a known adaptive algorithm. Even in the case where the communication condition varies fast, therefore, communication of high quality can be implemented.

As a fourth application example, the channel impulse response estimation section 111 receives the received signal and the hard decision value, and updates the estimation value of the channel impulse response by using the known adaptive algorithm. And the replica generation section 112 updates the replica at intervals of a certain fixed period instead of updating the replica whenever the estimation value of the channel impulse response is updated. Thus in the fourth application example, further the estimation value of the updated channel impulse response is not reflected to the replica successively, but reflected to the replica intermittently. As compared with the third application example, therefore, the computation quantity required for replica calculation can be reduced.

As heretofore described, in the first embodiment, the hard decision value obtained by using the hard decision decoding and the soft decision value obtained by using the soft decision decoding can be selected suitably. Even in the case where the encoding factor of the error correction is close to unity, or the case where there are data that are not subjected to error correction, therefore, the best transmission quality can be provided at all times.

Fig. 12 is a diagram showing a configuration of a second embodiment of a receiving apparatus according to the present invention. In Fig. 12, 121a, ... , 121b denote antennas, 122a, ... , 122b analog processing sections, 123a, ... , 123b A/D conversion sections, 124 a soft decision section, and 15 an error correction section. Fig. 12 shows a configuration in the case where the first embodiment described earlier is applied to diversity receiving. Hereafter, only portions of the present embodiment that differ from those of the above-described first embodiment will be described.

First, upon receiving received waves via the antennas 121a, ... , 121b, the analog processing sections 122a, ..., 122b conduct processing such as band limiting and down converting, and convert the received waves to baseband analog signals. Upon receiving the analog signals, the A/D conversion sections 123a, ..., 123b convert the analog signals to digital received signals (hereafter referred to as received signals). Upon receiving the received signals of P systems output by the A/D conversion sections 123a, ..., 123b, the soft decision section 124 outputs a soft decision value as a result of demodulation thereof. Finally, the error correction section 15 conducts error correction such as de-interleaving and decoding in the same way as the foregoing description.

An operation of the soft decision section 124 will now be described in detail. Fig. 13 is a diagram showing a first configuration example of the soft decision section 124. In Fig. 13, numeral 131 denotes an equalizer and 132 denotes a decision value combining section.

First, the equalizer 131 estimates a soft decision value and a hard decision value on the basis of the received signals of P systems it has received. Subsequently, the decision value combining section 132 conducts synthesis processing on the soft decision value and the hard decision value output by the equalizer 131, and outputs its result as a soft decision value according to a procedure similar to that of the above-described decision value combining section 22.

A detailed operation of the equalizer 131 will now be described. Fig. 14 is a diagram showing a configuration of the equalizer 131. In Fig. 14, 161 denotes a channel impulse response estimation section, 162 a replica generation section, and 163a, 163b, ... , 163c branch metric generation sections. Update of survivors and survivor metrics is conducted on the basis of the Viterbi algorithm. Components similar to those of the above-described first embodiment are denoted by like characters, and description thereof will be omitted. In the ensuing description, it is supposed that 8PSK is used.

First, the channel impulse response estimation section 161 estimates transmission characteristics corresponding to respective received signals according to the known technique by utilizing training sequences respectively contained in the received signals of P systems.

The replica generation section 162 receives the channel impulse responses of P systems output by the channel impulse response estimation section 161, and calculates replicas of P systems corresponding to $(8 \times M)$ branches by using an equation (7). And the replica generation section 162 outputs replicas x(i, p) of P systems (p = 1, 2, ... , P) to corresponding ith branch metric generation sections 163a to 163c, respectively. The replica generation section 162 stores the current replica until the next replica is calculated.

$$x(i, p) = \Sigma \, h\,(j, p) \times I'\,(L\text{-}j, i) \qquad (7)$$

In the equation (7), $\Sigma$ represents the sum total for j = 0, ... , L, and p represents a number of received signals simultaneously received. Here, replicas are calculated for p = 1, 2, ... , P, respectively. Furthermore, i represents a branch number. Replicas are calculated for i = 1, 2, ... , (8 x M), respectively. Furthermore, x(i, p) represents a replica corresponding to an ith branch (i branch metric generation sections) of a pth received signal, and h(j, p) represents a channel impulse response corresponding to a symbol delayed by j symbols of a pth received signal, whereas h(0, p) represents a channel impulse response corresponding to a symbol of the pth received signal that arrives without a delay. Furthermore, I'(j,i) represents a jth symbol of a symbol sequence corresponding to an ith branch, and it is common to respective received signals.

After calculation of replicas of P systems, ith branch metric generation sections 163a to 163c receive received signals of P systems r(n, p) and the replicas x(i, p) output by the replica generation section 162, and calculate branch metrics according to an equation (8),

$$e(n,i) = \Sigma - |r(n, p)-x(i, p)|^2 \qquad (8)$$

where $\Sigma$ represents the sum total for p = 1, 2, ... , P, and e (n, i) represents a branch metric output by the ith branch metric generation sections 163a to 163c at time n.

The calculation method of the branch metrics are not restricted to the equation (8). For example, a method utilizing the Manhattan distance as in an equation (9) or other methods may be utilized.

$$e(n, i) = \Sigma - |r (n, p)-x (i, p) | \qquad (9)$$

Thereafter, the equalizer 131 operates according to a procedure similar to that of the equalizer 21 in the above-described embodiment. Consequently, the hard decision sequence estimation section 67 outputs a hard decision value, and the soft decision value generation section 68 outputs a soft decision value.

Here, the equalizer to which the configuration of Fig. 6 in the first embodiment is applied has been described. However, the equalizer is not limited thereto. As for the equalizer 131, for example, the configuration of Fig. 8, 9 or 11 in the first embodiment may also be applied.

Fig. 15 is a diagram showing a second configuration example of the soft decision section 124. In Fig. 15, 141a, ... , 141b denote noise power estimation sections, and 142 denotes an equalizer. Components similar to those of the above-described first embodiment are denoted by like characters, and description thereof will be omitted.

First, the noise power estimation sections 141a to 141b estimate noise powers of respective received signals by utilizing training sequences contained in respective corresponding received signals. The equalizer 142 receives received signals of P systems and estimation values of noise powers corresponding to respective received signals, and estimate soft decision values and hard decision values respectively according to a procedure similar to that of Fig. 2 described above.

In the equalizer 142 (see Fig. 14) shown in Fig. 15, i branch metric generation sections 163a to 163c receive received signals r(n, p) of P systems, estimation values Y(p) of noise power output by the noise power estimation sections 141a to 141b, and replicas x(i, p) output by the replica generation section 162, and calculate branch metrics according to an equation (10),

$$e(n, i) = \Sigma - (|r(n, p)-x(i, p)|^2)/Y(p) \qquad (10)$$

where $\Sigma$ represents the sum total for p = 1, 2, ... , P.

Fig. 16 is a diagram showing a third configuration example of the soft decision section 124. In Fig. 16, 151a, ... , 151b denote level adjustment sections, and 152 denotes an equalizer. Components similar to those of the above-described Figs. 13 and 15 are denoted by like characters, and description thereof will be omitted.

First, the level adjustment sections 151a to 151b receive respective corresponding received signals, conduct level adjustment on the received signals, and output the received signals subjected to the level adjustment and level adjustment quantities to the equalizer 152. The equalizer 152 receives received signals output by the level adjustment sections 151a to 151b and the level adjustment quantities, and estimate soft decision values and hard decision values respectively according to a procedure similar to that of Fig. 3 described above.

In the equalizer 152 (see Fig. 14) shown in Fig. 16, (8 × M) branch metric generation sections 163a to 163c receive received signals r'(n, p) of P systems output by the level adjustment sections 151a to 151b, the level adjustment quantities A(n, p), and replicas x (i, p) output by the replica generation section 162, and calculate branch metrics according to an equation (11),

$$e(n, i) = \Sigma - (|r'(n, p)-x(i, p) |/A(n, p))^2 \qquad (11)$$

where $\Sigma$ represents the sum total for p = 1, 2, ... , P. In the level adjustment sections 151a to 151b, the received signal is subjected to level adjustment according to an equation (12).

$$r' (n, p) = r(n, p) \times A(n, p) \qquad (12)$$

The processing of the level adjustment sections 151a to 151b may be conducted in the analog processing sections 122a to 122b instead of the soft decision section 124. Furthermore, the processing of the level adjustment sections 151a to 151b may be conducted in both the analog processing sections 122a to 122b and the soft decision section 124. In this case, the soft decision value is corrected by using both level adjustment quantities.

The second embodiment thus corresponds to diversity receiving. In other words, at the time of branch metric generation, metrics are combined for each of signals received by means of diversity receiving, and equalization processing is conducted on the basis of the synthesized path metric. As compared with the first embodiment, therefore, communication of a better quality can be provided.

Fig. 17 is a diagram showing a configuration of a third embodiment of a radio communication receiving apparatus according to the present invention. In Fig. 17, 201 denotes a channel impulse response estimation section, 202 a time inversion control section, 203 a received signal inversion section, and 204 a soft decision value inversion section. Components similar to those of the above-described first embodiment are denoted by like characters, and description thereof will be omitted.

The channel impulse response estimation section 201 calculates an estimation value of a channel impulse response according to the known technique by utilizing a training sequence contained in the received signal it has received. In the same way as the foregoing description, the estimation value of the channel impulse response is hereafter referred to simply as the channel impulse response.

The time inversion control section 202 determines the processing direction of the received signal on the basis of the channel impulse response output by the channel impulse response estimation section 201. For example, power (square of the absolute value) of the channel impulse response is calculated. In the case where the position of maximum power exists in a former half of an effective channel impulse response, the time inversion control section 202 controls the received signal inversion section 203 so as not to conduct the time inversion of the received signal. In contrast with this, in the case where the position of maximum power exists in a latter half of the effective channel impulse response, the time inversion control section 202 controls the received signal inversion section 203 so as to conduct the time inversion of the received signal.

Control of the time inversion control section 202 will now be described concretely. In the present embodiment, the case where power of the transmission characteristic has the following values will be described as an example.

$$|h\,(0)|^2 = 20$$

$$|h\,(1)|^2 = 39$$

$$|h\,(2)|^2 = 54$$

$$|h\,(3)\,|^2 = 27$$

$$|h\,(4)\,|^2 = 8$$

For example, in the case where the effective channel impulse response is prescribed to be at least 10, the effective channel impulse response ranges over h(0), h(1), h(2) and h(3). The channel impulse response that maximizes the power becomes h(2), and it is located in the latter half of the effective channel impulse response. Therefore, the received signal is inverted as described above. In this example, h(0) and h(1) are located in the former half, whereas h(2) and h(3) are located in the latter half.

According to the control of the time inversion control section 202, the received signal inversion section 203 inverts the received signal. When inverting the received signal, however, the received signal inversion section 203 shifts the received signal by the number of the maximum delay symbols of the effective transmission path and conducts the time inversion. In the case where the time inversion of the received signal has thus been conducted, channel impulse responses h'(0), h'(1), h'(2) and h'(3) after the time inversion become:

$$h'\,(0) = h\,(3)$$

$$h'\,(1) = h\,(2)$$

$$h'\,(2) = h\,(1)$$

$$h'\,(3) = h\,(0)$$

And their power values become:

$$|h\,(0)\,|^2 = 27$$

$$|h\,(1)\,|^2 = 54$$

$$|h\,(2)\,|^2 = 39$$

$$|h\,(3)\,|^2 = 20$$

Before the time inversion, the power of the channel impulse response becomes the maximum after a delay of two symbols. After the time inversion, however, the power of the channel impulse response becomes the maximum after a delay of one symbol. By conducting the inversion processing, the delay time of the channel impulse response of maximum power can be remarkably shortened.

The soft decision section 14 operates in the same way as the first embodiment described earlier, and outputs an estimated soft decision value to the soft decision value inversion section 204.

Under the control of the time inversion control section 202, the soft decision value inversion section 204 conducts time inversion on the soft decision values (restores the soft decision values in the original order), and outputs its result to the error correction section 15.

Even in the case where a delay wave having a high power and a long delay time exists, the soft decision processing can thus be conducted in a state of reduced delay time in the third embodiment by conducting time inversion on the received signal.

Fig. 18 is a diagram showing a configuration of a fourth embodiment of a radio communication receiving apparatus according to the present invention. In Fig. 18, 211 denotes an equalization scheme control section, and 212a and 212b denote soft decision sections. Components similar to those of the above-described first and third embodiments are denoted by like characters, and description thereof will be omitted.

In the same way as the third embodiment, the channel impulse response estimation section 201 estimates the channel impulse response. The equalization scheme control section 211 selects an equalization scheme for conducting processing on the received signal on the basis of the channel impulse response output by the transmission characteristic estimation section 201. For example, the equalization scheme control section 211 calculates the power of the channel impulse response (square of absolute value). If the maximum delay time of the effective channel impulse response is longer than a predetermined criterion, then the soft decision section 212a is selected. If the maximum delay time of the effective channel impulse response is shorter than the predetermined criterion, then the soft decision section 212b is selected.

In the soft decision section 212a, successive update of the channel impulse response is not conducted and the number M of states of the equalizer is made larger than that of the soft decision section 212b. For example, the equalizer of Fig. 9 is included in the soft decision section of Figs. 2 to 5, and the number of states is set equal to M = 64. On the other hand, in the soft decision section 212b, successive update of the channel impulse response is conducted and the number M of states of the equalizer is made smaller than that of the soft decision section 212a. For example, the equalizer of Fig. 11 is included in the soft decision section of Figs. 2 to 5, and the number of states is set equal to M = 8.

As heretofore described, a suitable equalization scheme can be selected according to the state of the transmission path. As a result, the communication quality can be further improved. Furthermore, by combining an equalizer in which the successive update of the channel impulse response is not conducted and consequently the number of states is increased with an equalizer in which the successive update of the channel impulse response is conducted and consequently the number of states is decreased, the communication quality can be improved while suppressing the increase of the processing quantity.

As shown in Fig. 19, a configuration obtained by combining the configuration of the present embodiment with the configuration of the above-described third embodiment may also be used. In this case, effects of both configurations can be obtained. As for the soft decision section 212a, a configuration other than that of Fig. 9 may also be used so long as successive update of the channel impulse response is not conducted. As for the soft decision section 212b, a configuration other than that of Fig. 11 may also be used so long as successive update of the channel impulse response is conducted.

INDUSTRIAL APPLICABILITY

As heretofore described, the radio communication receiving apparatus according to the present invention is useful in fields of radio communication such as automobile telephone, portable telephone, and cordless telephone. In particular, it is suitable for radio communication receiving apparatuses that operate in a communication environment in which there is frequency selective fading caused by inter-symbol interference.

**Claims**

1. A radio communication receiving apparatus including an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value,

     the soft decision unit comprising:

     an equalization unit which outputs a soft decision value and a hard decision value based on the received signal; and
     a decision value combining unit which combines the soft decision value with the hard decision value according to a predetermined method, and outputs a decision value after the combining as a soft decision value.

2. The radio communication receiving apparatus according to claim 1, further comprising:

a noise power estimation unit which estimates noise - power contained in the received signal; and
a soft decision value compensation unit which corrects the soft decision value after combining according to a noise power estimation value.

3. A radio communication receiving apparatus including an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value,
the soft decision unit comprising:

a level adjustment unit which conducts a level adjustment on the received signal;
an equalization unit which outputs a soft decision value and a hard decision value based on the received signal after the level adjustment;
a decision value combining unit which combines the soft decision value with the hard decision value according to a predetermined method, and outputs a decision value after the combining as a soft decision value; and
a soft decision value compensation unit which corrects the soft decision value after the combining according to a level adjustment quantity.

4. A radio communication receiving apparatus including an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value,
the soft decision unit comprising:

an equalization unit which outputs a soft decision value and a hard decision value based on the received signal;
a noise power estimation unit which estimates noise power contained in the received signal;
a soft decision value compensation unit which corrects the soft decision value according to a noise power estimation value; and
a decision value combining unit which combines the soft decision value after the correction with the hard decision value according to a predetermined method, and outputs a decision value after the combining as a soft decision value.

5. A radio communication receiving apparatus including an analog processing unit which converts a received wave to a baseband analog signal, an A/D conversion unit which converts the analog signal to a digital received signal, a soft decision unit which outputs a soft decision value as a demodulation result of the received signal, and an error correction unit which conducts error correction on the soft decision value,
the soft decision unit comprising:

a level adjustment unit which conducts a level adjustment on the received signal;
an equalization unit which outputs a soft decision value and a hard decision value based on the received signal after the level adjustment;
a soft decision value compensation unit which corrects the soft decision value according to a level adjustment quantity; and
a decision value combining unit which combines the soft decision value after the correction with the hard decision value according to a predetermined method, and outputs a decision value after the combining as a soft decision value.

6. The radio communication receiving apparatus according to any one of claims 1 to 5, further comprising:

a first channel impulse response estimation unit which estimates a channel impulse response based on a received signal output by the A/D conversion unit;
a time inversion control unit which exercises control as to whether time inversion should be conducted on the received signal based on a value of the channel impulse response estimation;
a received signal inversion/non-inversion unit which conducts processing on the.received signal under the control of the time inversion control unit, and outputs a result of the processing to the soft decision unit; and
a soft decision value inversion/non-inversion unit which restores soft decision values output by the soft decision unit, in order preceding the time inversion under the control of the time inversion control unit,

wherein the soft decision unit conducts soft decision processing on a signal output by the received signal inversion/non-inversion unit, and
the error correction unit conducts error correction on the signal output by the received signal inversion/non-inversion unit.

7. The radio communication receiving apparatus according to any one of claims 1 to 5, comprising:

a first soft decision unit that does not conduct successive update of a channel impulse response and a second soft decision unit that conducts successive update of the channel impulse response both serving as the soft decision unit;

a first channel impulse response estimation unit which estimates the channel impulse response based on a received signal output by the A/D conversion unit; and

a soft decision selection unit which selects a soft decision unit to be used, from the first soft decision unit and the second soft decision unit based on a value of the channel impulse response estimation.

8. The radio communication receiving apparatus according to any one of claims 1 to 5, comprising:

a first soft decision unit that does not conduct successive update of a channel impulse response and a second soft decision unit that conducts successive update of the channel impulse response both serving as the soft decision unit;

a first channel impulse response estimation unit which estimates the channel impulse response based on a received signal output by the A/D conversion unit;

a soft decision selection unit which selects a soft decision unit to be used, from the first soft decision unit and the second soft decision unit based on a value of the channel impulse response estimation;

a time inversion control unit which exercises control as to whether time inversion should be conducted on the received signal based on the channel impulse response estimation value;

a received signal inversion/non-inversion unit which conducts processing on the received signal under the control of the time inversion control unit, and outputs a result of the processing to the selected soft decision unit; and

a soft decision value inversion/non-inversion unit which restores soft decision values output by the selected soft decision unit, in order preceding the time inversion under the control of the time inversion control unit,

wherein the selected soft decision unit conducts soft decision processing on a signal output by the received signal inversion/non-inversion unit, and

the error correction unit conducts error correction on the signal output by the soft decision value inversion/non-inversion unit.

9. The radio communication receiving apparatus according to any one of claims 1 to 5, wherein the decision value combining unit comprises:

a soft decision value/hard decision value conversion unit which converts a soft decision value with a symbol taken as unit, received from the equalization unit to a hard decision value;

a comparison unit which compares the hard decision value after the conversion with a hard decision value with a symbol taken as unit, received from the equalization unit; and

a selection unit which selects either the hard decision value or the soft decision value output by the equalization unit based on a result of the comparison, and outputs a decision value after the selection as a soft decision value.

10. The radio communication receiving apparatus according to any one of claims 1 to 5, wherein the decision value combining unit comprises:

a soft decision value/hard decision value conversion unit which converts a soft decision value with a symbol taken as unit, received from the equalization unit to a hard decision value;

a bit conversion unit which converts a hard decision value with a symbol taken as unit, output by the equalization unit to a hard decision value with a bit taken as unit;

a comparison unit which compares hard decision values after the conversion with each other; and

a selection unit which selects either the hard decision value or the soft decision value output by the equalization unit based on a result of the comparison, and outputs a decision value after the selection as a soft decision value.

11. The radio communication receiving apparatus according to any one of claims 1 to 5, wherein the equalization unit comprises:

a second channel impulse response estimation unit which estimates a channel impulse response of the received signal;

a replica generation unit which generates replicas of the received signal based on a value of estimation of the channel impulse response;

a branch metric generation unit which calculates a branch metric based on the replicas and the received signal;

an addition unit which adds the branch metric and a survivor metric, and outputs a result thereof as a path metric;

a survivor selection unit which selects survivor metrics based on path metrics with a branch taken as unit, and further generates path selection information that represents which path has been selected;

a hard decision sequence estimation unit which estimates a hard decision value based on the path selection information; and

a soft decision value generation unit which generates a soft decision value based on the path metrics with a branch taken as unit.

12. The radio communication receiving apparatus according to any one of claims 1 to 5,

wherein the equalization unit comprises:

a second channel impulse response estimation unit which estimates a channel impulse response of the received signal;

a replica generation unit which generates replicas of the received signal based on a value of estimation of the channel impulse response;

a branch metric generation unit which calculates a branch metric based on the replicas and the received signal;

an addition unit which adds the branch metric and a survivor metric, and outputs a result thereof as a path metric;

a survivor selection unit which selects survivor metrics based on path metrics with a branch taken as unit, and further generates path selection information that represents which path has been selected;

a hard decision sequence estimation unit which estimates a hard decision value based on the path selection information; and

a soft decision value generation unit which generates a soft decision value based on the survivor metrics.

13. The radio communication receiving apparatus according to claim 11, wherein the replica generation unit further generates replicas of the received signal by using the path selection information besides the value of estimation of the channel impulse response.

14. The radio communication receiving apparatus according to claim 13, wherein

the second channel impulse response estimation unit further receives the path selection information and successively updates the channel impulse response of the received signal by using an adaptive algorithm, and

the replica generation unit updates replicas of the received signal corresponding to respective branches whenever the value of estimation of the channel impulse response is updated.

15. The radio communication receiving apparatus according to claim 13, wherein

the second channel impulse response estimation unit further receives the path selection information and successively updates the channel impulse response of the received signal by using an adaptive algorithm, and

the replica generation unit updates replicas of the received signal corresponding to respective branches at predetermined specific periods.

16. The radio communication receiving apparatus according to claim 13, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches whenever the value of estimation of the channel impulse response is updated.

17. The radio communication receiving apparatus according to claim 13, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches at predetermined specific periods.

18. The radio communication receiving apparatus according to claim 13, wherein

the second channel impulse response estimation unit further successively updates the channel impulse response of the received signal by taking a state as unit, based on the path selection information, and

the replica generation unit updates replicas of the received signal corresponding to respective branches by using the path selection information whenever the channel impulse response with a state taken as the unit is updated.

19. The radio communication receiving apparatus according to claim 11, wherein the soft decision value generation unit comprises:

a symbol unit maximum likelihood metric selection unit which selects a maximum likelihood metric by taking a symbol as unit, based on the path metrics or the survivor metrics with a branch taken as unit;

a bit-by-bit maximum likelihood metric selection unit which selects a maximum likelihood metric by taking a bit as unit, based on the maximum likelihood metric with a symbol taken as the unit; and

a metric difference calculation unit which calculates a difference between the maximum likelihood metrics with a bit taken as the unit.

20. The radio communication receiving apparatus according to claim 6,

wherein the decision value combining unit comprises:

a soft decision value/hard decision value conversion unit which converts a soft decision value with a symbol taken as unit, received from the equalization unit to a hard decision value;
a comparison unit which compares the hard decision value after the conversion with a hard decision value with a symbol taken as unit, received from the equalization unit; and
a selection unit which selects either the hard decision value or the soft decision value output by the equalization unit based on a result of the comparison, and outputs a decision value after the selection as a soft decision value.

21. The radio communication receiving apparatus according to claim 6,

wherein the decision value combining unit comprises:

a soft decision value/hard decision value conversion unit which converts a soft decision value with a symbol taken as unit, received from the equalization unit to a hard decision value;
a bit conversion unit which converts a hard decision value with a symbol taken as unit, output by the equalization unit to a hard decision value with a bit taken as unit;
a comparison unit which compares hard decision values after the conversion with each other; and
a selection unit which selects either the hard decision value or the soft decision value output by the equalization unit based on a result of the comparison, and outputs a decision value after the selection as a soft decision value.

22. The radio communication receiving apparatus according to claim 6,

wherein the equalization unit comprises:

a second channel impulse response estimation unit which estimates a channel impulse response of the received signal;
a replica generation unit which generates replicas of the received signal based on a value of estimation of the channel impulse response;
a branch metric generation unit which calculates a branch metric based on the replicas and the received signal;
an addition unit which adds the branch metric and a survivor metric, and outputs a result thereof as a path metric;
a survivor selection unit which selects survivor metrics based on the path metrics with a branch taken as unit, and further generates path selection information that represents which path has been selected;
a hard decision sequence estimation unit which estimates a hard decision value based on the path selection information; and
a soft decision value generation unit which generates a soft decision value based on the path metrics with a branch taken as unit.

23. The radio communication receiving apparatus according to claim 6,

wherein the equalization unit comprises:

a second channel impulse response estimation unit which estimates a channel impulse response of the received signal;
a replica generation unit which generates replicas of the received signal based on a value of estimation of the channel impulse response;
a branch metric generation unit which calculates a branch metric based on the replicas and the received signal;
an addition unit which adds the branch metric and a survivor metric, and outputs a result thereof as a path metric;
a survivor selection unit which selects survivor metrics based on the path metrics with a branch taken as unit, and further generates path selection information that represents which path has been selected;
a hard decision sequence estimation unit which estimates a hard decision value based on the path selection information; and
a soft decision value generation unit which generates a soft decision value based on the survivor metrics.

24. The radio communication receiving apparatus according to claim 22, wherein the replica generation unit further generates replicas of the received signal by using the path selection information besides the value of estimation of the channel impulse response.

**25.** The radio communication receiving apparatus according to claim 24, wherein

the second channel impulse response estimation unit further receives the path selection information and successively updates the channel impulse response of the received signal by using an adaptive algorithm, and

the replica generation unit updates replicas of the received signal corresponding to respective branches whenever the value of estimation of the channel impulse response is updated.

**26.** The radio communication receiving apparatus according to claim 24, wherein

the second channel impulse response estimation unit further receives the path selection information and successively updates the channel impulse response of the received signal by using an adaptive algorithm, and

the replica generation unit updates replicas of the received signal corresponding to respective branches at predetermined specific periods.

**27.** The radio communication receiving apparatus according to claim 24, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches whenever the value of estimation of the channel impulse response is updated.

**28.** The radio communication receiving apparatus according to claim 24, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches at predetermined specific periods.

**29.** The radio communication receiving apparatus according to claim 24, wherein

the second channel impulse response estimation unit further successively updates the channel impulse response of the received signal by taking a state as unit, based on the path selection information, and

the replica generation unit updates replicas of the received signal corresponding to respective branches by using the path selection information whenever the channel impulse response with a state taken as the unit is updated.

**30.** The radio communication receiving apparatus according to claim 22, wherein the soft decision value generation unit comprises:

a symbol unit maximum likelihood metric selection unit which selects a maximum likelihood metric by taking a symbol as unit, based on the path metrics or the survivor metrics with a branch taken as unit;

a bit-by-bit maximum likelihood metric selection unit which selects a maximum likelihood metric by taking a bit as unit, based on the maximum likelihood metric with a symbol taken as the unit; and

a metric difference calculation unit which calculates a difference between the maximum likelihood metrics with a bit taken as the unit.

**31.** The radio communication receiving apparatus according to claim 7,

wherein the decision value combining unit comprises:

a soft decision value/hard decision value conversion unit which converts a soft decision value with a symbol taken as unit, received from the equalization unit to a hard decision value;

a comparison unit which compares the hard decision value after the conversion with a hard decision value with a symbol taken as unit, received from the equalization unit; and

a selection unit which selects either the hard decision value or the soft decision value output by the equalization unit based on a result of the comparison, and outputs a decision value after the selection as a soft decision value.

**32.** The radio communication receiving apparatus according to claim 7,

wherein the decision value combining unit comprises:

a soft decision value/hard decision value conversion unit which converts a soft decision value with a symbol taken as unit, received from the equalization unit to a hard decision value;

a bit conversion unit which converts a hard decision value with a symbol taken as unit, output by the equalization unit to a hard decision value with a bit taken as unit;

a comparison unit which compares hard decision values after the conversion with each other; and

a selection unit which selects either the hard decision value or the soft decision value output by the equalization unit based on a result of the comparison, and outputs a decision value after the selection as a soft decision value.

33. The radio communication receiving apparatus according to claim 7,
    wherein the equalization unit comprises:

    a second channel impulse response estimation unit which estimates a channel impulse response of the received signal;
    a replica generation unit which generates replicas of the received signal based on a value of estimation of the channel impulse response;
    a branch metric generation unit which calculates a branch metric based on the replicas and the received signal;
    an addition unit which adds the branch metric and a survivor metric, and outputs a result thereof as a path metric;
    a survivor selection unit which selects survivor metrics based on the path metrics with a branch taken as unit, and further generates path selection information that represents which path has been selected;
    a hard decision sequence estimation unit which estimates a hard decision value based on the path selection information; and
    a soft decision value generation unit which generates a soft decision value based on the path metrics with a branch taken as unit.

34. The radio communication receiving apparatus according to claim 7,
    wherein the equalization unit comprises:

    a second channel impulse response estimation unit which estimates a channel impulse response of the received signal;
    a replica generation unit which generates replicas of the received signal based on a value of estimation of the channel impulse response;
    a branch metric generation unit which calculates a branch metric based on the replicas and the received signal;
    an addition unit which adds the branch metric and a survivor metric, and outputs a result thereof as a path metric;
    a survivor selection unit which selects survivor metrics based on the path metrics with a branch taken as unit, and further generates path selection information that represents which path has been selected;
    a hard decision sequence estimation unit which estimates a hard decision value based on the path selection information; and
    a soft decision value generation unit which generates a soft decision value based on the survivor metrics.

35. The radio communication receiving apparatus according to claim 33, wherein the replica generation unit further generates replicas of the received signal by using the path selection information besides the value of estimation of the channel impulse response.

36. The radio communication receiving apparatus according to claim 35, wherein
    the second channel impulse response estimation unit further receives the path selection information and successively updates the channel impulse response of the received signal by using an adaptive algorithm, and
    the replica generation unit updates replicas of the received signal corresponding to respective branches whenever the value of estimation of the channel impulse response is updated.

37. The radio communication receiving apparatus according to claim 35, wherein
    the second channel impulse response estimation unit further receives the path selection information and successively updates the channel impulse response of the received signal by using an adaptive algorithm, and
    the replica generation unit updates replicas of the received signal corresponding to respective branches at predetermined specific periods.

38. The radio communication receiving apparatus according to claim 35, wherein
    the second channel impulse response estimation unit further receives the hard decision value output by the hard decision sequence estimation unit and successively updates the channel impulse response of the received signal by using an adaptive algorithm, and
    the replica generation unit updates replicas of the received signal corresponding to respective branches whenever the value of estimation of the channel impulse response is updated.

39. The radio communication receiving apparatus according to claim 35, wherein
    the second channel impulse response estimation unit further receives the hard decision value output by the hard decision sequence estimation unit and successively updates the channel impulse response of the received signal by using an adaptive algorithm, and
    the replica generation unit updates replicas of the received signal corresponding to respective branches at predetermined specific periods.

40. The radio communication receiving apparatus according to claim 35, wherein

the second channel impulse response estimation unit further successively updates the channel impulse response of the received signal by taking a state as unit, based on the path selection information, and

the replica generation unit updates replicas of the received signal corresponding to respective branches by using the path selection information whenever the channel impulse response with a state taken as the unit is updated.

41. The radio communication receiving apparatus according to claim 33, wherein the soft decision value generation unit comprises:

a symbol unit maximum likelihood metric selection unit which selects a maximum likelihood metric by taking a symbol as unit, based on the path metrics or the survivor metrics with a branch taken as unit;

a bit-by-bit maximum likelihood metric selection unit which selects a maximum likelihood metric by taking a bit as unit, based on the maximum likelihood metric with a symbol taken as the unit; and

a metric difference calculation unit which calculates a difference between the maximum likelihood metrics with a bit taken as the unit.

42. The radio communication receiving apparatus according to claim 8,

wherein the decision value combining unit comprises:

a soft decision value/hard decision value conversion unit which converts a soft decision value with a symbol taken as unit, received from the equalization unit to a hard decision value;

a comparison unit which compares the hard decision value after the conversion with a hard decision value with a symbol taken as unit, received from the equalization unit; and

a selection unit which selects either the hard decision value or the soft decision value output by the equalization unit based on a result of the comparison, and outputs a decision value after the selection as a soft decision value.

43. The radio communication receiving apparatus according to claim 8,

wherein the decision value combining unit comprises:

a soft decision value/hard decision value conversion unit which converts a soft decision value with a symbol taken as unit, received from the equalization unit to a hard decision value;

a bit conversion unit which converts a hard decision value with a symbol taken as unit, output by the equalization unit to a hard decision value with a bit taken as unit;

a comparison unit which compares hard decision values after the conversion with each other; and

a selection unit which selects either the hard decision value or the soft decision value output by the equalization unit based on a result of the comparison, and outputs a decision value after the selection as a soft decision value.

44. The radio communication receiving apparatus according to claim 8,

wherein the equalization unit comprises:

a second channel impulse response estimation unit which estimates a channel impulse response of the received signal;

a replica generation unit which generates replicas of the received signal based on a value of estimation of the channel impulse response;

a branch metric generation unit which calculates a branch metric based on the replicas and the received signal;

an addition unit which adds the branch metric and a survivor metric, and outputs a result thereof as a path metric;

a survivor selection unit which selects survivor metrics based on the path metrics with a branch taken as unit, and further generates path selection information that represents which path has been selected;

a hard decision sequence estimation unit which estimates a hard decision value based on the path selection information; and

a soft decision value generation unit which generates a soft decision value based on the path metrics with a branch taken as unit.

45. The radio communication receiving apparatus according to claim 8,

wherein the equalization unit comprises:

a second channel impulse response estimation unit which estimates a channel impulse response of the received signal;

a replica generation unit which generates replicas of the received signal based on a value of estimation of the channel impulse response;

a branch metric generation unit which calculates a branch metric based on the replicas and the received signal;

an addition unit which adds the branch metric and a survivor metric, and outputs a result thereof as a path metric;

a survivor selection unit which selects survivor metrics based on the path metrics with a branch taken as unit, and further generates path selection information that represents which path has been selected;

a hard decision sequence estimation unit which estimates a hard decision value based on the path selection information; and

a soft decision value generation unit which generates a soft decision value based on the survivor metrics.

46. The radio communication receiving apparatus according to claim 44, wherein the replica generation unit further generates replicas of the received signal by using the path selection information besides the value of estimation of the channel impulse response.

47. The radio communication receiving apparatus according to claim 46, wherein

the second channel impulse response estimation unit further receives the path selection information and successively updates the channel impulse response of the received signal by using an adaptive algorithm, and

the replica generation unit updates replicas of the received signal corresponding to respective branches whenever the value of estimation of the channel impulse response is updated.

48. The radio communication receiving apparatus according to claim 46, wherein

the second channel impulse response estimation unit further receives the path selection information and successively updates the channel impulse response of the received signal by using an adaptive algorithm, and

the replica generation unit updates replicas of the received signal corresponding to respective branches at predetermined specific periods.

49. The radio communication receiving apparatus according to claim 46, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches whenever the value of estimation of the channel impulse response is updated.

50. The radio communication receiving apparatus according to claim 46, wherein

the second channel impulse response estimation unit further receives the hard decision value output by the hard decision sequence estimation unit and successively updates the channel impulse response of the received signal by using an adaptive algorithm, and

the replica generation unit updates replicas of the received signal corresponding to respective branches at predetermined specific periods.

51. The radio communication receiving apparatus according to claim 46, wherein

the second channel impulse response estimation unit further successively updates the channel impulse response of the received signal by taking a state as unit, based on the path selection information, and

the replica generation unit updates replicas of the received signal corresponding to respective branches by using the path selection information whenever the channel impulse response with a state taken as the unit is updated.

52. The radio communication receiving apparatus according to claim 44, wherein the soft decision value generation unit comprises:

a symbol unit maximum likelihood metric selection unit which selects a maximum likelihood metric by taking a symbol as unit, based on the path metrics or the survivor metrics with a branch taken as unit;

a bit-by-bit maximum likelihood metric selection unit which selects a maximum likelihood metric by taking a bit as unit, based on the maximum likelihood metric with a symbol taken as the unit; and

a metric difference calculation unit which calculates a difference between the maximum likelihood metrics with a bit taken as the unit.

53. A radio communication receiving apparatus including an analog processing unit of P systems ($P \geq 1$) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value,

the soft decision unit comprising:

an equalization unit which outputs a soft decision value and a hard decision value based on the received signals of the P systems; and

a decision value combining unit which combines the soft decision value with the hard decision value according to a predeterminedmethod, and outputs a decision value after the combining as a soft decision value.

**54.** A radio communication receiving apparatus including an analog processing unit of P systems (P ≥ 1) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value, the soft decision unit comprising:

a noise power estimation unit which individually estimates noise power contained in the received signals of the P systems;
an equalization unit which outputs a soft decision value and a hard decision value based on the received signals of the P systems and noise power estimation values of the P systems; and
a decision value combining unit which combines the soft decision value with the hard decision value according to a predetermined method, and outputs a decision value after the combining as a soft decision value.

**55.** A radio communication receiving apparatus including an analog processing unit of P systems (P ≥ 1) which converts received waves to baseband analog signals, an A/D conversion unit of the P systems which converts the analog signals to digital received signals, a soft decision unit which outputs a soft decision value as a demodulation result of the received signals, and an error correction unit which conducts error correction on the soft decision value, the soft decision unit comprising:

a level adjustment unit which individually conducts level adjustment on the received signals of the P systems;
an equalization unit which outputs a soft decision value and a hard decision value based on the received signals of the P systems and level adjustment quantities of the P systems; and
a decision value combining unit which combines the soft decision value with the hard decision value according to a predetermined method, and outputs a decision value after the combining as a soft decision value.

**56.** The radio communication receiving apparatus according to claim 53, 54 or 55, wherein the decision value combining unit comprises:

a soft decision value/hard decision value conversion unit which converts a soft decision value with a symbol taken as unit, received from the equalization unit to a hard decision value;
a comparison unit which compares the hard decision value after the conversion with a hard decision value with a symbol taken as unit, received from the equalization unit; and
a selection unit which selects either the hard decision value or the soft decision value output by the equalization unit based on a result of the comparison, and outputs a decision value after the selection as a soft decision value.

**57.** The radio communication receiving apparatus according to claim 53, 54 or 55, wherein the decision value combining unit comprises:

a soft decision value/hard decision value conversion unit which converts a soft decision value with a symbol taken as unit, received from the equalization unit to a hard decision value;
a bit conversion unit which converts a hard decision value with a symbol taken as unit, output by the equalization unit to a hard decision value with a bit taken as unit;
a comparison unit which compares hard decision values after the conversion with each other; and
a selection unit which selects either the hard decision value or the soft decision value output by the equalization unit based on a result of the comparison, and outputs a decision value after the selection as a soft decision value.

**58.** The radio communication receiving apparatus according to claim 53, 54 or 55, wherein the equalization unit comprises:

a channel impulse response estimation unit which individually estimates channel impulse responses of the received signals of the P systems;
a replica generation unit which generates replicas of the received signals of the P systems based on values of estimation of the channel impulse responses of the P systems;
a branch metric generation unit which calculates a branch metric based on the replicas of the P systems and the received signals of the P systems;
an addition unit which adds the branch metric and a survivor metric, and outputs a result thereof as a path metric;
a survivor selection unit which selects survivor metrics based on the path metrics with a branch taken as unit, and further generates path selection information that represents which path has been selected;
a hard decision sequence estimation unit which estimates a hard decision value based on the path selection information; and

a soft decision value generation unit which generates a soft decision value based on the path metrics with a branch taken as unit.

59. The radio communication receiving apparatus according to claim 53, 54 or 55,
wherein the equalization unit comprises:

a channel impulse response estimation unit which individually estimates channel impulse responses of the received signals of the P systems;
a replica generation unit which generates replicas of the received signals of the P systems based on values of estimation of the channel impulse responses of the P systems;
a branch metric generation unit which calculates a branch metric based on the replicas of the P systems and the received signals of the P systems;
an addition unit which adds the branch metric and a survivor metric, and outputs a result thereof as a path metric;
a survivor selection unit which selects survivor metrics based on the path metrics with a branch taken as unit, and further generates path selection information that represents which path has been selected;
a hard decision sequence estimation unit which estimates a hard decision value based on the path selection information; and
a soft decision value generation unit which generates a soft decision value based on the path metrics with a branch taken as unit.

60. The radio communication receiving apparatus according to claim 58, wherein the replica generation unit further generates replicas of the received signals by using the path selection information besides the value of estimation of the channel impulse responses.

61. The radio communication receiving apparatus according to claim 60, wherein
the channel impulse response estimation unit further receives the path selection information and successively updates the channel impulse responses of the received signals of the P systems by using an adaptive algorithm, and
the replica generation unit updates replicas of the received signals of the P systems corresponding to respective branches whenever the values of estimation of the channel impulse responses are updated.

62. The radio communication receiving apparatus according to claim 60, wherein
the channel impulse response estimation unit further receives the path selection information and successively updates the channel impulse responses of the received signals of the P systems by using an adaptive algorithm, and
the replica generation unit updates replicas of the received signals corresponding to respective branches at predetermined specific periods.

63. The radio communication receiving apparatus according to claim 60, wherein
the channel impulse response estimation unit further receives the hard decision value output by the hard decision sequence estimation unit and successively updates the channel impulse responses of the received signals of the P systems by using an adaptive algorithm, and
the replica generation unit updates replicas of the received signals of the P systems corresponding to respective branches whenever the values of estimation of the channel impulse responses are updated.

64. The radio communication receiving apparatus according to claim 60, wherein
the channel impulse response estimation unit further receives the hard decision value output by the hard decision sequence estimation unit and successively updates the channel impulse responses of the received signals of the P systems by using an adaptive algorithm, and
the replica generation unit updates replicas of the received signals of the P systems corresponding to respective branches at predetermined specific periods.

65. The radio communication receiving apparatus according to claim 60, wherein
the channel impulse response estimation unit further successively updates the channel impulse responses of the received signals of the P systems by taking a state as unit, based on the path selection information, and
the replica generation unit updates replicas of the received signals of the P systems corresponding to respective branches by using the path selection information whenever the channel impulse responses with a state taken as the unit are updated.

66. The radio communication receiving apparatus according to claim 58, wherein the branch metric generation unit calculates branch metrics based on the replicas of the P systems, the received signals of the P systems, and noise poser estimation values of the received signals of the P systems.

67. The radio communication receiving apparatus according to claim 58, wherein the branch metric generation unit calculates branch metrics based on the replicas of the P systems, the received signals of the P systems, and level adjustment quantities of the received signals of the P systems.

68. The radio communication receiving apparatus according to claim 58, wherein the soft decision value generation unit comprises:

a symbol unit maximum likelihood metric selection unit which selects a maximum likelihood metric by taking a symbol as unit, based on the path metrics or the survivor metrics with a branch taken as unit;
a bit-by-bit maximum likelihood metric selection unit which selects a maximum likelihood metric by taking a bit as unit, based on the maximum likelihood metric with a symbol taken as the unit; and
a metric difference calculation unit which calculates a difference between the maximum likelihood metrics with a bit taken as the unit.

69. A receiving method for outputting a soft decision value as a demodulation result of a received signal and conducting error correction on the soft decision value, the receiving method comprising the steps of:

outputting a soft decision value and a hard decision value based on the received signal;
combining the soft decision value with the hard decision value according to a predetermined method, and outputting a decision value after the combining as a soft decision value;
estimating noise power contained in the received signal; and
correcting the soft decision value after combining according to a noise power estimation value.

70. A receivingmethod for outputting a soft decision value as a demodulation result of a received signal and conducting error correction on the soft decision value, the receiving method comprising the steps of:

conducting a level adjustment on the received signal;
outputting a soft decision value and a hard decision value based on the received signal after the level adjustment;
combining the soft decision value with the hard decision value according to a predetermined method, and outputting a decision value after the combining as a soft decision value; and
correcting the soft decision value after the combining according to a level adjustment quantity.

71. A receiving method for outputting a soft decision value as a demodulation result of a received signal and conducting error correction on the soft decision value, the receiving method rising the steps of:

outputting a soft decision value and a hard decision value based on the received signal;
estimating noise power contained in the received signal;
correcting the soft decision value according to a noise power estimation value; and
combining the soft decision value after the correction with the hard decision value according to a predetermined method, and outputting a decision value after the combining as a soft decision value.

72. A receiving method for outputting a soft decision value as a demodulation result of a received signal and conducting error correction on the soft decision value, the receiving method comprising the steps of:

conducting a level adjustment on the received signal;
outputting a soft decision value and a hard decision value based on the received signal after the level adjustment;
correcting the soft decision value according to a level adjustment quantity; and
combining the soft decision value after the correction with the hard decision value according to a predetermined method, and outputting a decision value after the combining as a soft decision value.

73. A receiving method for outputting a soft decision value as a demodulation result of received signals of P systems and conducting error correction on the soft decision value, the receiving method comprising the steps of:

outputting a soft decision value and a hard decision value based on the received signals of the P systems; and
combining the soft decision value with the hard decision value according to a predetermined method, and outputting a decision value after the combining as a soft decision value.

74. A receiving method for outputting a soft decision value as a demodulation result of received signals of P systems and conducting error correction on the soft decision value, the receiving method comprising the steps of:

individually estimating noise power contained in the received signals of the P systems;
outputting a soft decision value and a hard decision value based on the received signals of the P systems and estimation values of noise power of the P systems; and combining the soft decision value with the hard decision value according to a predetermined method, and outputting a decision value after the combining as a soft decision value.

**75.** A receiving method for outputting a soft decision value as a demodulation result of received signals of P systems and conducting error correction on the soft decision value, the receiving method comprising the steps of:

individually conducting level adjustment on the received signals of the P systems; outputting a soft decision value and a hard decision value based on the received signals of the P systems and level adjustment quantities; and combining the soft decision value with the hard decision value according to a predetermined method, and outputting a decision value after the combining as a soft decision value.

# FIG.1

# FIG.2

DECISION VALUE COMBINING SECTION

## FIG.3

## FIG.4

# FIG.5

21

EQUALIZER

31

LEVEL
ADJUSTMENT
SECTION

LEVEL
ADJUSTMENT
QUANTITY

SOFT
DECISION
VALUE

32

SOFT DECISION
VALUE
COMPENSATION
SECTION

HARD
DECISION
VALUE

22

DECISION
VALUE
COMBINING
SECTION

# FIG.6

68

SOFT DECISION VALUE
GENERATION SECTION

SOFT
DECISION
VALUE

66

SURVIVOR
METRIC
STORAGE
SECTION

62

REPLICA GENERATION SECTION

63a

BRANCH
METRIC
GENERATION
SECTION

64a

63b

BRANCH
METRIC
GENERATION
SECTION

64b

63c

BRANCH
METRIC
GENERATION
SECTION

64c

65

SURVIVOR SELECTION SECTION

61

CHANNEL
IMPULSE
RESPONSE
ESTIMATION
SECTION

67

HARD DECISION
SEQUENCE
ESTIMATION SECTION

HARD
DECISION
VALUE

RECEIVED
SIGNAL

# FIG.7

SOFT DECISION VALUE GENERATION SECTION 68

71

MAXIMUM LIKELIHOOD METRIC SELECTION SECTION

72a

BIT-BY-BIT MAXIMUM LIKELIHOOD METRIC SELECTION SECTION

73a

METRIC DIFFERENCE CALCULATION SECTION

72b

BIT-BY-BIT MAXIMUM LIKELIHOOD METRIC SELECTION SECTION

73b

METRIC DIFFERENCE CALCULATION SECTION

72c

BIT-BY-BIT MAXIMUM LIKELIHOOD METRIC SELECTION SECTION

73c

METRIC DIFFERENCE CALCULATION SECTION

EP 1 213 852 A1

# FIG.8

81
SOFT DECISION VALUE
GENERATION SECTION → SOFT DECISION VALUE

66
SURVIVOR METRIC STORAGE SECTION

62
REPLICA GENERATION SECTION

61
CHANNEL IMPULSE RESPONSE ESTIMATION SECTION

63a
BRANCH METRIC GENERATION SECTION

64a

63b
BRANCH METRIC GENERATION SECTION

64b

63c
BRANCH METRIC GENERATION SECTION

64c

65
SURVIVOR SELECTION SECTION

67
HARD DECISION SEQUENCE ESTIMATION SECTION → HARD DECISION VALUE

RECEIVED SIGNAL

41

EP 1 213 852 A1

# FIG.9

# FIG.10

92

REPLICA GENERATION SECTION

SURVIVOR
SELECTION
INFORMATION

REPLICA CALCULATION SECTION

100a

101

ROM

103

102a
102b
102c
102d
102e

⊗
⊗
⊗
⊗
⊗

Σ

REPLICA

100b — REPLICA
CALCULATION
SECTION

REPLICA

100c

REPLICA
CALCULATION
SECTION

REPLICA

CHANNEL IMPULSE
RESPONSE
ESTIMATION VALUE

EP 1 213 852 A1

# FIG.11

SOFT DECISION VALUE

HARD DECISION VALUE

RECEIVED SIGNAL

68 SOFT DECISION VALUE GENERATION SECTION

66 SURVIVOR METRIC STORAGE SECTION

112 REPLICA GENERATION SECTION

63a BRANCH METRIC GENERATION SECTION 64a

63b BRANCH METRIC GENERATION SECTION 64b

63c BRANCH METRIC GENERATION SECTION 64c

91 SURVIVOR SELECTION SECTION

111 CHANNEL IMPULSE RESPONSE ESTIMATION SECTION

67 HARD DECISION SEQUENCE ESTIMATION SECTION

# FIG.12

```
121a
  \/
122a
┌──────────────┐      123a                    124
│   ANALOG     │   ┌──────────────┐     ┌──────────────┐
│ PROCESSING   │──▶│     A/D      │────▶│              │        15
│   SECTION    │   │  CONVERSION  │     │              │   ┌──────────────┐
└──────────────┘   │   SECTION    │     │    SOFT      │   │    ERROR     │
                   └──────────────┘     │   DECISION   │──▶│  CORRECTION  │──▶
121b                                    │   SECTION    │   │   SECTION    │
  \/                                    │              │   └──────────────┘
122b                                    │              │
┌──────────────┐      123b             └──────────────┘
│   ANALOG     │   ┌──────────────┐
│ PROCESSING   │──▶│     A/D      │────▶
│   SECTION    │   │  CONVERSION  │
└──────────────┘   │   SECTION    │
                   └──────────────┘
```

# FIG.13

```
                    131        SOFT            132
                             DECISION
 ┌──┐   ┌──────────────┐     VALUE       ┌──────────────┐
 │  │──▶│              │─────────────────▶│   DECISION   │
 │  │   │  EQUALIZER   │                  │    VALUE     │──▶
 │  │──▶│              │─────────────────▶│  COMBINING   │
 └──┘   └──────────────┘     HARD         │   SECTION    │
                           DECISION       └──────────────┘
                            VALUE
```

# FIG.14

SOFT DECISION VALUE GENERATION SECTION *68* → SOFT DECISION VALUE

PATH METRIC STORAGE SECTION *66*

REPLICA GENERATION SECTION *162*

BRANCH METRIC GENERATION SECTION *163a*  ⊕ *64a*

BRANCH METRIC GENERATION SECTION *163b*  ⊕ *64b*

⋰

BRANCH METRIC GENERATION SECTION *163c*  ⊕ *64c*

CHANNEL IMPULSE RESPONSE ESTIMATION SECTION *161*

SURVIVOR SELECTION SECTION *65*

HARD DECISION SEQUENCE ESTIMATION SECTION *67* → HARD DECISION VALUE

RECEIVED SIGNAL

## FIG.15

EQUALIZER ⎰142

SOFT DECISION VALUE

DECISION VALUE COMBINING SECTION ⎰132

HARD DECISION VALUE

NOISE POWER ESTIMATION SECTION

NOISE POWER ESTIMATION VALUE

141a
141b

## FIG.16

LEVEL ADJUSTMENT SECTION

EQUALIZER ⎰152

SOFT DECISION VALUE

DECISION VALUE COMBINING SECTION ⎰132

HARD DECISION VALUE

LEVEL ADJUSTMENT QUANTITY

151a
151b

# FIG.17

EP 1 213 852 A1

# FIG.18

EP 1 213 852 A1

# FIG.19

# EP 1 213 852 A1

<table>
<tr><td colspan="2" style="text-align:center"><b>INTERNATIONAL SEARCH REPORT</b></td><td colspan="2">International application No.<br><br>PCT/JP01/04805</td></tr>
</table>

| A. CLASSIFICATION OF SUBJECT MATTER |
|---|
| Int.Cl⁷   H04B7/005 |

According to International Patent Classification (IPC) or to both national classification and IPC

| B. FIELDS SEARCHED |
|---|
| Minimum documentation searched (classification system followed by classification symbols)<br>Int.Cl⁷   H04B 7/005-7/015, H04B 7/24-7/26, H04L27/00-27/30 |

Documentation searched other than minimum documentation to the extent that such documents are included in the fields searched
Jitsuyo Shinan Koho      1922-1996      Toroku Jitsuyo Shinan Koho  1994-2001
Kokai Jitsuyo Shinan Koho  1971-2001      Jitsuyo Shinan Toroku Koho  1996-2001

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 8-307283 A (Oki Electric Industry Co., Ltd.),<br>22 November, 1996 (22.11.96),<br>& EP 0731567 A2     & CA 2171406 A<br>& US 5867531 A | 1,7,9,11-19<br>22-30,33-41,<br>44-52,56,58-68 |
| Y | | 2-6,8,10,20,<br>21,31,32,42,<br>43,53-55,57,<br>69-75 |
| X | JP 10-262090 A (Oki Electric Industry Co., Ltd.),<br>29 September, 1998 (29.09.98),<br>(Family: none) | 1,7,9,11-19<br>22-30,33-41,<br>44-52,56,<br>58-68 |
| Y | | 2-6,8,10,20,<br>21,31,32,42,<br>43,53-55,57,<br>69-75 |
| Y | JP 6-85859 A (Mitsubishi Electric Corporation),<br>25 March, 1994 (25.03.94),<br>(Family: none) | 2,4,69,71 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 August, 2001 (28.08.01) | Date of mailing of the international search report<br>11 September, 2001 (11.09.01) |
|---|---|
| Name and mailing address of the ISA/<br>Japanese Patent Office | Authorized officer |
| Facsimile No. | Telephone No. |

Form PCT/ISA/210 (second sheet) (July 1992)

51

**EP 1 213 852 A1**

<table>
<tr><td colspan="2" align="center">**INTERNATIONAL SEARCH REPORT**</td><td>International application No.<br>PCT/JP01/04805</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 7-79262 A (Hitachi, Ltd.),<br>20 March, 1995 (20.03.95),<br>(Family: none) | 2,4,69,71 |
| Y | JP 11-220503 A (Mitsubishi Electric Corporation),<br>10 August, 1999 (10.08.99),<br>& EP 0933902 A2 | 2,4,69,71 |
| Y | JP 8-172382 A (Fujitsu Limited),<br>02 July, 1996 (02.07.96),<br>& GB 2296411 A    & US 5598434 A | 3,5,55,70,72 |
| Y | JP 10-75266 A (Sony Corporation),<br>17 March, 1998 (17.03.98),<br>(Family: none) | 10,56 |
| Y | JP 10-79763 A (Sony Corporation),<br>24 March, 1998 (24.03.98),<br>& EP 0827300 A2    & KR 98024231 A | 10,56 |
| Y | JP 10-107866 A (Sony Corporation),<br>24 April, 1998 (24.04.98),<br>(Family: none) | 10,56 |
| Y | JP 3-226027 A (Fujitsu Limited),<br>07 October, 1991 (07.10.91),<br>(Family: none) | 20,21,31,32,<br>42,43,57 |
| Y | JP 7-50624 A (Fujitsu Limited),<br>21 February, 1995 (21.02.95),<br>(Family: none) | 20,21,31,32,<br>42,43,57 |
| Y | JP 10-98411 A (Oki Electric Industry Co., Ltd.),<br>14 April, 1998 (14.04.98),<br>(Family: none) | 20,21,31,32,<br>42,43,57 |
| Y | JP 10-215236 A (Oki Electric Industry Co., Ltd.),<br>11 August, 1998 (11.08.98),<br>& CA 2228204 A    & KR 98070964 A<br>& US 6172969 A | 20,21,31,32,<br>42,43,57 |
| X | JP 10-190496 A (Fujitsu Limited),<br>21 July, 1998 (21.07.98),<br>& EP 0849886 A2    & KR 98064356 A<br>& US 6192067 A | 53,54,73-75 |
| Y | JP 7-235917 A (Mitsubishi Electric Corporation),<br>05 September, 1995 (05.09.95),<br>(Family: none) | 53,54,73-75 |

Form PCT/ISA/210 (continuation of second sheet) (July 1992)